# EUROPEAN PATENT APPLICATION

(11) **EP 4 424 769 A1**
(43) Date of publication of application: **04.09.2024**
(21) Application number: 22887006.9
(22) Date of filing: 25.10.2022
(51) Int. Cl.: C08L 63/00, C08K 3/08, C08K 5/09, C08K 5/13, C08K 5/1539, C08K 5/37, C08L 61/06, H01B 1/22

(54) **CONDUCTIVE RESIN COMPOSITION**

(30) Priority: 26.10.2021 JP 2021175019; 26.10.2021 JP 2021175020; 26.10.2021 JP 2021175021; 26.10.2021 JP 2021175022; 21.10.2022 JP 2022169227; 21.10.2022 JP 2022169228; 21.10.2022 JP 2022169229; 21.10.2022 JP 2022169230
(71) Applicant: Sakata INX Corporation, Osaka-shi, Osaka 550-0002 (JP)
(72) Inventor: SHIRAKAWA, Yuki, Osaka-shi, Osaka 550-0002 (JP); FUKUSHIMA, Ko, Osaka-shi, Osaka 550-0002 (JP)
(74) Representative: Grünecker Patent- und Rechtsanwälte PartG mbB
(86) International application number: PCT/JP2022/039718
(87) International publication number: WO 2023/074680

(57) **Abstract**

An object is to provide a conductive resin composition that demonstrates good conductivity and excellent adhesion (joining strength) with respect to various types of base materials and is useful as conductive inks, conductive adhesives, circuit connection materials, etc., and also to provide a conductive film formed by the conductive resin composition, a conductive ink containing the conductive resin composition, a conductive adhesive containing the conductive resin composition, and a circuit connection material containing the conductive resin composition. As a solution, a conductive resin composition is provided that contains (a) tin powder, (b) epoxy resin, and (c) organic acid compound, and satisfies requirement (A) and/or requirement (B) below:
(A): the content of the (a) tin powder, relative to the total amount, 100% by mass, of the (a) tin powder, (b) epoxy resin, and (c) organic acid compound, is 90.1% by mass or higher; and/or
(B): (d) curing agent is contained, and (d) curing agent includes one or more types selected from (d1) acid anhydride-based curing agents, (d2) thiol-based curing agents and (d3) phenol-based curing agents.

## Description

### Technical Field

The present invention relates to a conductive resin composition. Also, the present invention relates to a conductive film, a conductive ink used when forming circuits, etc., on base materials by means of screen printing, etc., a conductive adhesive used for bonding the target bonding areas in a manner having conductivity, and a circuit connection material used when conductively connecting electronic components to circuit boards, etc.

### Background Art

Conductive resin compositions of various types of compounding makeups are known, which are used in the formation of electronic circuits, bonding of electronic components, and various other applications as conductive pastes, conductive films, conductive inks, conductive paints, circuit connection materials, conductive adhesives, etc.

For example, films having conductivity useful for forming conductive circuits, electrodes, and other conductive structures are desired.

For example, conductive inks that can be applied under various printing methods and are useful in the manufacture of flexible plastic base materials, film base materials, sheet base materials, molded resin products, glass/glass epoxy/ceramic base materials, etc., having interconnections, traces, electrodes, and other conductive structures, are desired.

As examples, circuit connection materials for achieving high-density mounting and high integration of LED elements, semiconductor elements, capacitors, and various other electronic components on the same circuit board in computers, mobile phones, and other electronic devices, are desired.

Conventionally known conductive resin compositions include conductive resin compositions (conductive pastes) containing resins and conductive particles. However, conductive resin compositions do not have sufficiently low volume resistivity, and must use silver particles as conductive particles in applications where low volume resistivity is required. Additionally, if a lot of conductive particles are contained in a conductive resin composition to lower volume resistivity of a film obtained therefrom, adhesion (bonding strength) of the film will decline to an unsatisfactory level with respect to various types of base materials.

Patent Literature 1 discloses a conductive paste composition whose conductive powder is a silver-based powder using at least silver, while the resin component is at least one of thermosetting resin and thermoplastic resin, and which further contains an ester-based compound or salt thereof or ether/amine-based compound having a specific molecular weight and structure.

### Background Art Literature

### Patent Literature

Patent Literature 1: Japanese Patent Laid-open No. 2020-205245

### Summary of the Invention

### Problems to Be Solved by the Invention

However, silver particles are very expensive and unfavorable in terms of cost; on the other hand, conductive resin compositions that use a lot of conductive particles other than silver particles may result in their film having high volume resistivity and thus insufficient conductivity. Also, when a lot of conductive particles are contained to lower volume resistivity, adhesion may become insufficient with respect to various types of base materials.

To date, no conductive resin composition is known that, when formed into a conductive film, exhibits low volume resistivity, good conductivity, and excellent adhesion (bonding strength) with respect to various types of base materials.

One object of the present invention is to provide a conductive resin composition that demonstrates good conductivity and excellent adhesion (bonding strength) with respect to various types of base materials, and thus is useful as conductive inks, conductive adhesives, circuit connection materials, etc. Another object of the present invention is to provide a conductive film formed by the conductive resin composition, a conductive ink containing the conductive resin composition, a conductive adhesive containing the conductive resin composition, and a circuit connection material containing the conductive resin composition.

### Means for Solving the Problems

As a result of studying in earnest to achieve the aforementioned objects, the inventor of the present invention found that the objects could be achieved by a conductive resin composition of specific compounding makeup, and eventually completed the present invention.

To be specific, the present invention is as follows.
[Item 1] A conductive resin composition containing (a) tin powder, (b) epoxy resin, and (c) organic acid compound, and satisfying requirement (A) and/or requirement (B) below;
   (A): the content of (a) tin powder, relative to the total amount, 100% by mass, of (a) tin powder, (b) epoxy resin, and (c) organic acid compound, is 90.1% by mass or higher; and/or
   (B): (d) curing agent is contained, and (d) curing agent includes one or more types selected from (d1) acid anhydride-based curing agents, (d2) thiol-based curing agents, and (d3) phenol-based curing agents.
[Item 2] The conductive resin composition according to item 1, wherein the (b) epoxy resin meet requirement (i) and/or requirement (ii) below;
   (i): liquid at 25°C; and/or
   (ii): one or more types selected from the group that consists of bisphenol-type epoxy resins, rubber-modified epoxy resins, alicyclic epoxy resins, glycidyl amine-type epoxy resins, urethane-modified epoxy resins, polysulfide-modified epoxy resins, chelate-modified epoxy resins, trisphenol methane-type epoxy resins, naphthalene-type epoxy resins, dicyclopentadiene-modified epoxy resins, aliphatic epoxy resins, polyether-modified epoxy resins, polyfunctional aromatic epoxy resins, and hydrogenated bisphenol-type epoxy resins.
[Item 3] The conductive resin composition according to item 1 or 2, wherein the (d1) acid anhydride-based curing agents are polyacid polyanhydrides expressed by the structural formula (1) below; 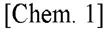 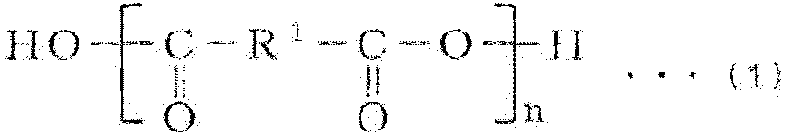 (In structural formula (1), R¹ is a straight-chain or branched hydrocarbon group with 10 or more but no more than 40 carbon atoms.)
[Item 4] The conductive resin composition according to item 1 or 2, wherein the (d1) acid anhydride-based curing agents, (d2) thiol-based curing agents, or (d3) phenol-based curing agents are liquid at 25°C.
[Item 5] A conductive film formed by the conductive resin composition according to item 1 or 2, whose volume resistivity is under 1.0 × 10⁻² Ω·cm.
[Item 6] A conductive ink containing the conductive resin composition according to item 1 or 2.
[Item 7] A conductive adhesive containing the conductive resin composition according to item 1 or 2.
[Item 8] A circuit connection material containing the conductive resin composition according to item 1 or 2.

### Effects of the Invention

According to the present invention, a conductive resin composition that demonstrates good conductivity and excellent adhesion (bonding strength) with respect to various types of base materials and thus is useful as conductive inks, conductive adhesives, circuit connection materials, etc., is provided.

The conductive resin composition proposed by the present invention is useful as printed electronics materials, and extremely useful in the mass production of display devices, vehicle-related components, IoT, mobile communication systems, and various other electronic equipment, etc.

### Mode for Carrying Out the Invention

The present invention relates to a conductive resin composition, a conductive film, a conductive ink, a conductive adhesive, and a circuit connection material. These are explained below in detail.

### [Conductive Resin Composition]

The conductive resin composition proposed by the present invention is a conductive resin composition containing (a) tin powder, (b) epoxy resin, and (c) organic acid compound, and satisfying requirement (A) and/or requirement (B) below:
(A): the content of (a) tin powder, relative to the total amount, 100% by mass, of (a) tin powder, (b) epoxy resin, and (c) organic acid compound, is 90.1% by mass or higher; and/or
(B): (d) curing agent is contained, and the (d) curing agent includes one or more types selected from (d1) acid anhydride-based curing agents, (d2) thiol-based curing agents, and (d3) phenol-based curing agents.

### <(a) Tin Powder>

The tin powder contained in the conductive resin composition proposed by the present invention is a powder comprising tin that accounts for 99.5% by mass or higher, as well as unavoidable impurities.

The content ratio of tin in the tin powder can be easily measured using an X-ray fluorescence (XRF) analysis device, etc.

The unavoidable impurities contained in the tin powder include one or more types of other atoms selected from the group that consists of, for example, Mn, Sb, Si, K, Na, Li, Ba, Sr, Ca, Mg, Be, Zn, Pb, Cd, Tl, V, Al, Zr, W, Mo, Ti, Co, Ag, Cu, Ni, Au, B, C, N, O, Ge, Sb, In, As, Al, Fe, and the like.

The content ratio of other atoms is preferably under 0.3% by mass, or more preferably 0.1% by mass or lower, in the tin powder.

The shape of tin powder is not specifically limited. For example, a tin powder of scale-like (flaky), flat, perfectly spherical, approximately spherical (such as having a length-to-width aspect ratio of 1.5 or lower), block-like, plate-like, polygonal pyramid-like, polyhedral, bar-like, fibrous, needle-like, amorphous, or other shape may be used according to the application, etc. Under the present invention, a tin powder of scale-like, perfectly spherical, approximately spherical, flat, or amorphous shape is preferred from the viewpoints of volume resistivity, dispersibility, ease of handling, etc.

The volume-averaged particle size (particle size D50, representing the diameter corresponding to a cumulative percentage frequency of 50% in volume-based particle size distribution) of spherical or amorphous tin powder is not specifically limited. The D50 is 0.5 µm or more, for example, or preferably 1.0 µm or more, or more preferably 3.0 µm or more, and 300 µm or less, for example, or preferably 200 µm or less, or more preferably 100 µm or less. When the D50 is 0.5 µm or more, the tin powder will have good dispersibility and ease of handling. When the D50 is 300 µm or less, volume resistivity can be lowered, resulting in good dispersibility and ease of handling.

The average diameter, average thickness, and aspect ratio (average diameter/average thickness) of flat or scale-like tin powder are not specifically limited.

The average diameter is 0.5 µm or more, for example, or preferably 1.0 µm or more, or more preferably 5.0 µm or more, and 500.0 µm or less, for example, or preferably 300.0 µm or less, or more preferably 150.0 µm or less.

The average thickness is 0.1 µm or more, for example, or preferably 0.5 µm or more, or more preferably 1.0 µm or more, and 50.0 µm or less, for example, or preferably 20.0 µm or less, or more preferably 10.0 µm or less.

The aspect ratio is 2 or higher, for example, or preferably 10 or higher, or more preferably 50 or higher.

The content of (a) tin powder in a conductive resin composition satisfying requirement (A) above, of the conductive resin compositions conforming to the present invention, is 90.1% by mass or higher, assuming that the total amount of (a) tin powder, (b) epoxy resin, and (c) organic acid compound represents 100% by mass. It is preferably 90.5% by mass or higher, or more preferably 91% by mass or higher, or yet more preferably 92% by mass or higher, and 98.0% by mass or lower, for example, or preferably 97.5% by mass or lower.

If the content of (a) tin powder relative to the total amount, 100% by mass, of the (a) tin powder, (b) epoxy resin, and (c) organic acid compound is under 90.1% by mass, conductivity may drop and volume resistivity rise, or the LED may not turn on in the LED lighting test described in Examples A to D, while a content exceeding 98.0% by mass may cause bonding strength of the coating film to drop.

The content of (a) tin powder in a conductive resin composition satisfying requirement (B) above, of the conductive resin compositions conforming to the present invention, is not specifically limited. It may be determined as deemed appropriate from the viewpoints of conductivity, etc., of the conductive resin composition. Assuming that the total amount of (a) tin powder, (b) epoxy resin, (c) organic acid compound, and (d) curing agent represents 100% by mass, it is 50.0% by mass or higher, for example, or preferably 60.0% by mass or higher, or more preferably 85.0% by mass or higher, or yet more preferably 88.0% by mass or higher, or even more preferably 91.0% by mass or higher, and 98.0% by mass or lower, for example, or preferably 97.0% by mass or lower.

If the content of (a) tin powder relative to the total amount, 100% by mass, of (a) tin powder, (b) epoxy resin, (c) organic acid compound, and (d) curing agent is under 50.0% by mass, conductivity may drop and volume resistivity rise, or the LED may not turn on in the LED lighting test described in Examples A to D, while a content exceeding 98.0% by mass may cause bonding strength of the coating film to drop.

### <(b) Epoxy Resins>

For the epoxy resins, any monomers, oligomers, and polymers having two or more epoxy groups in the molecular structure may be used in general, where their molecular weight and molecular structure are not specifically limited. The epoxy resins used in the present embodiment include, for example, biphenyl-type epoxy resins; bisphenol A-type epoxy resins, bisphenol F-type epoxy resins, tetramethyl bisphenol F-type epoxy resins, propylene oxide adduct bisphenol-type epoxy resins, and other bisphenol-type epoxy resins; naphthalene-type epoxy resins; alkylene oxide-modified bisphenol-type resins; chelate-modified epoxy resins; stilbene-type epoxy resins; phenol novolac-type epoxy resins, cresol novolac-type epoxy resins, and other novolac-type epoxy resins; trisphenol methane-type epoxy resins, alkyl-modified trisphenol methane-type epoxy resins, and other polyfunctional epoxy resins; phenol aralkyl-type epoxy resins having the phenylene skeleton, phenol aralkyl-type epoxy resins having the biphenylene skeleton, and other aralkyl-type epoxy resins; dihydroxynaphthalene-type epoxy resins, epoxy resins obtained by glycidyl-etherifying the dimers of dihydroxynaphthalene, and other naphthol-type epoxy resins; triglycidyl isocyanurate, monoallyl diglycidyl isocyanurate, and other triazine nucleus-containing epoxy resins; resins obtained by reacting isocyanate group-containing urethane bond-containing compounds and hydroxy group-containing epoxy compounds and other urethane-modified epoxy resins; dicyclopentadiene-modified epoxy resins and other bridged cyclic hydrocarbon compound-modified phenol-type epoxy resins; dimer acid-modified epoxy resins; rubber-modified epoxy resins; polysulfide-modified epoxy resins; glycidyl amine-type epoxy resins; glycidyl ester-type epoxy resins; etc. Also, the epoxy resins include, among the compounds containing two or more epoxy groups in the molecular structure, epoxylated products of bisphenol A, bisphenol F, biphenol and other bisphenol compounds or derivatives thereof, hydrogenated bisphenol A, hydrogenated bisphenol F, hydrogenated biphenol, cyclohexanediol, cyclohexanedimethanol, cyclohexanediethanol and other polyols having the alicyclic structure or derivatives thereof, and other alicyclic epoxy resins; epoxylated products of butanediol, hexanediol, octanediol, nonanediol, decanediol, polybutadiene polyols and other aliphatic polyols or derivatives thereof, and other aliphatic epoxy resins; epoxy resins having the trihydroxy phenyl methane skeleton (trisphenol methane skeleton); aminophenol-type epoxy resins; polyether-modified epoxy resins; polyfunctional aromatic epoxy resins; hydrogenated bisphenol-type epoxy resins, and the like, for example. Any one type of epoxy resin may be used alone, or two or more types may be combined.

From the viewpoint of improving the adhesion, heat resistance, workability, ease of handling, etc., in a more effective manner, preferably the conductive resin composition proposed by the present invention is such that the (b) epoxy resin are:
(i) liquid at 25°C; and/or
(ii) one or more types selected from the group that consists of bisphenol-type epoxy resins, rubber-modified epoxy resins, alicyclic epoxy resins, glycidyl amine-type epoxy resins, urethane-modified epoxy resins, polysulfide-modified epoxy resins, chelate-modified epoxy resins, trisphenol methane-type epoxy resins, naphthalene-type epoxy resins, dicyclopentadiene-modified epoxy resins, epoxylated products of aliphatic polyols or derivatives thereof and other aliphatic epoxy resins, polyether-modified epoxy resins, polyfunctional aromatic epoxy resins and hydrogenated bisphenol-type epoxy resins.

The epoxy resins that are liquid at 25°C include, for example, bisphenol-type epoxy resins, naphthalene-type epoxy resins; glycidyl ester-type epoxy resins, glycidyl amine-type epoxy resins, phenol novolac-type epoxy resins, alicyclic epoxy resins having the ester skeleton and other alicyclic epoxy resins, cyclohexane-type epoxy resins, cyclohexanedimethanol-type epoxy resins, glycidyl amine-type epoxy resins, epoxy resins that are epoxylated products of polybutadiene polyols, rubber-modified epoxy resins, chelate-modified epoxy resins, urethane-modified epoxy resins, polysulfide-modified epoxy resins, trisphenol methane-type epoxy resins, dicyclopentadiene-modified epoxy resins, epoxylated products of aliphatic polyols or derivatives thereof and other aliphatic epoxy resins, polyether-modified epoxy resins, polyfunctional aromatic epoxy resins, hydrogenated bisphenol-type epoxy resins, and the like. Preferably one or more types are selected from the group that consists of bisphenol-type epoxy resins, rubber-modified epoxy resins, alicyclic epoxy resins, glycidyl amine-type epoxy resins, urethane-modified epoxy resins, polysulfide-modified epoxy resins, chelate-modified epoxy resins, trisphenol methane-type epoxy resins, naphthalene-type epoxy resins, dicyclopentadiene-modified epoxy resins, epoxylated products of aliphatic polyols or derivatives thereof and other aliphatic epoxy resins, polyether-modified epoxy resins, polyfunctional aromatic epoxy resins, and hydrogenated bisphenol-type epoxy resins.

Specific examples include, for example, jER 807, jER 828, jER 828US, jER 828EL, jER 825, jER 630, jER 630LSD, etc., manufactured by Mitsubishi Chemical Corporation; ADEKA RESIN EP-4100, ADEKA RESIN EP-4300E, ADEKA RESIN EP-4400, ADEKA RESIN EP-4901E, ADEKA RESIN EP-4000, ADEKA RESIN EP-4000S, ADEKA RESIN EP-4005, ADEKA RESIN EPU-6, ADEKA RESIN EPU-1395, ADEKA RESIN EPU-73B, ADEKA RESIN EPU-17, ADEKA RESIN EPU-11F, ADEKA RESIN EPU-15F, ADEKA RESIN EPR-1415-1, ADEKA RESIN EPR-2000, ADEKA RESIN EPR-2007, ADEKA RESIN EP-49-10N, ADEKA RESIN EP-49-10P2, ADEKA RESIN EP-49-23, ADEKA GLYCIROL ED-503, ADEKA GLYCIROL ED-503G, ADEKA GLYCIROL ED-506, ADEKA GLYCIROL ED-523T, ADEKA GLYCIROL ED-505, etc., manufactured by ADEKA Corporation; FLEP-50, FLEP-60, etc., manufactured by Toray Fine Chemicals Co., Ltd.; EPOLITE 40E, EPOLITE 100E, EPOLITE 200E, EPOLITE 400E, EPOLITE 70P, EPOLITE 200P, EPOLITE 400P, EPOLITE 1500NP, EPOLITE 1600, EPOLITE 80MF, EPOLITE 4000, EPOLITE 3002 (N), etc., manufactured by Kyoeisha Chemical Co., Ltd.; and DENACOL EX-201, DENACOL EX-201-IM, DENACOL EX-252, DENACOL EX-991L, etc., manufactured by Nagase ChemteX Corporation. Any one type of these may be used alone, or two or more types may be combined.

In particular, preferably bisphenol-type epoxy resins, rubber-modified epoxy resins, alicyclic epoxy resins, glycidyl amine-type epoxy resins, urethane-modified epoxy resins, chelate-modified epoxy resins, polysulfide-modified epoxy resins, trisphenol methane-type epoxy resins, naphthalene-type epoxy resins, and dicyclopentadiene-modified epoxy resins are contained, from the viewpoints of the adhesion, heat resistance, workability, ease of handling, etc., of the obtained conductive resin composition. Any one type of these may be used alone, or two or more types may be combined.

### (Content of (b) Epoxy Resin)

The content of (b) epoxy resin in a conductive resin composition satisfying requirement (A) above, of the conductive resin compositions conforming to the present invention, is not specifically limited. Assuming that the total amount of (a) tin powder, (b) epoxy resin, and (c) organic acid compound represents 100% by mass, it is 0.5% by mass or higher, for example, or preferably 1.0% by mass or higher, or more preferably 1.5% by mass or higher, and 9.8% by mass or lower, for example, or preferably 8.0% by mass or lower, or more preferably 7.0% by mass or lower.

If the content of (b) epoxy resin relative to the total amount, 100% by mass, of (a) tin powder, (b) epoxy resin and (c) organic acid compound is under 1.0% by mass, the formation of film may be hindered and bonding strength of the coating film may drop, while a content exceeding 9.5% by mass may lead to a drop in conductivity and rise in volume resistivity or a failure of the LED to turn on in the LED lighting test described in Examples A to D.

The content of (b) epoxy resin in a conducive resin composition satisfying requirement (B) above, of the conductive resin compositions conforming to the present invention, is not specifically limited. Assuming that the total amount of (a) tin powder, (b) epoxy resin, (c) organic acid compound, and (d) curing agent represent 100% by mass, it is 0.5% by mass or higher, for example, or preferably 1.0% by mass or higher, or more preferably 1.5% by mass or higher, and 25.0% by mass or lower, for example, or preferably 20.0% by mass or lower, or more preferably 15.0% by mass or lower, or yet more preferably 10.0% by mass or lower.

If the content of (b) epoxy resin relative to the total amount, 100% by mass, of (a) tin powder, (b) epoxy resin, (c) organic acid compound, and (d) curing agent is under 0.5% by mass, the formation of film may be hindered and bonding strength of the coating film may drop, while a content exceeding 25.0% by mass may lead to a drop in conductivity and rise in volume resistivity or a failure of the LED to turn on in the LED lighting test described in Examples A to D.

### <(c) Organic Acid Compound>

The organic acid compounds include, for example, one type, or two or more types, of organic acid compounds expressed by R-Xₙ (in the formula, R is hydrogen or an organic group with 1 to 50 carbon atoms, X is an acid group where the multiple X's may be different from each other, and n is an integer of 1 or greater).

The acid groups expressed by X include, for example, carboxyl group (-COOH), sulfonic acid group (-SO₃H), phosphonic acid group (-PO₃H₂), phosphoric acid group (-PO₄H₂), etc.

The organic acid compounds include, for example, one or more types selected from the group that consists of organic carboxylic acid compounds, organic sulfonic acid compounds, organic phosphonic acid compounds, and the like. Organic carboxylic acid compounds are preferred.

### (Organic Carboxylic Acid Compounds)

The organic carboxylic acid compounds are not specifically limited so long as they are compounds with 1 to 50 carbon atoms having one or more carboxyl groups (-COOH) in the molecular structure.

The organic carboxylic acid compounds include, for example, formic acid, acetic acid, propionic acid, butanoic acid, pentanoic acid, hexanoic acid, heptanoic acid, octylic acid, lauric acid, myristic acid, pentadecylic acid, palmitic acid, margaric acid, stearic acid, 12-hydroxystearic acid, recinoleic acid, oleic acid, vaccenic acid, linoleic acid, linolenic acid, arachidic acid, behenic acid, lignoceric acid, cerotic acid, montanic acid, melissic acid, lactic acid, gluconic acid, malic acid, tartaric acid, citric acid, abietic acid, malonic acid, succinic acid, glutaric acid, adipic acid, glutaconic acid, pimelic acid, suberic acid, azelaic acid, 2-methyl azelaic acid, sebacic acid, decanedioic acid dodecanedioic acid, eicosanedioic acid, caproic acid, enanthic acid, caprylic acid, pelargonic acid, capric acid, behenic acid, arachidonic acid, eicosapentaenoic acid, docosahexaenoic acid, dodecenylsuccinic acid, citraconic acid, mesaconic acid, itaconic acid, dimethylolpropionic acid, dimethylolbutanoic acid, dimethylolbutyric acid, dimethylolvaleric acid, trimethylolpropanoic acid, trimethylolbutanoic acid, benzoic acid, salicylic acid, pyruvic acid, paramethylbenzoic acid, toluic acid, 4-ethylbenzoic acid, 4-propylbenzoic acid, 2-methylpropanoic acid, isopentanoic acid, 2-ethylhexanoic acid, acrylic acid, methacrylic acid, propiolic acid, crotonic acid, 2-ethyl-2-butenoic acid, maleic acid, fumaric acid, oxalic acid, hexane tricarboxylic acid, cyclohexyl carboxylic acid, 1,4-cyclohexyl dicarboxylic acid, ethylenediaminetetraacetic acid, isophthalic acid, terephthalic acid, naphthalene dicarboxylic acid, trimellitic acid, pyromellitic acid, palustric acid, isopimaric acid, and the like.

Furthermore, straight-chain or branched-chain dicarboxylic acids with 12 or more carbon atoms (such as SL-12, SL-20, UL-20, MMA-10R, SB-12, IPU-22, IPS-22, SB-20, UB-20, etc., manufactured by Okamura Oil Mill, Ltd.) can also be used favorably.

### (Organic Sulfonic Acid Compounds)

The organic sulfonic acid compounds are not specifically limited so long as they are compounds having one or more sulfonic acid groups (-SO₃H) in the molecular structure.

They include one or more types selected from the group that consists of, for example, benzenesulfonic acid, n-butylbenzenesulfonic acid, n-octylbenzenesulfonic acid, n-dodecylbenzenesulfonic acid, pentadecylbenzenesulfonic acid, 2,5-dimethylbenzenesulfonic acid, p-chlorobenzenesulfonic acid, 2,5-dichlorobenzenesulfonic acid, p-phenolsulfonic acid, cumenesulfonic acid, xylenesulfonic acid, o-cresolsulfonic acid, m-cresolsulfonic acid, p-cresolsulfonic acid, p-toluenesulfonic acid, 2-naphthalenesulfonic acid, 1-naphthalenesulfonic acid, styrenesulfonic acid, 4,4-biphenyldisulfonic acid, anthraquinone-2-sulfonic acid, m-benzenedisulfonic acid, aniline-2,4-disulfonic acid, anthraquinone-1,5-disulfonic acid, polystyrenesulfonic acid, and other aromatic sulfonic acid compounds; methanesulfonic acid, ethanesulfonic acid, 1-propanesulfonic acid, n-octylsulfonic acid, pentadecylsulfonic acid, trifluoromethanesulfonic acid, trichloromethanesulfonic acid, 1,2-ethanedisulfonic acid, 1,3-propanedisulfonic acid, aminomethanesulfonic acid, 2-aminoethanesulfonic acid, and other aliphatic sulfonic acid compounds; cyclopentanesulfonic acid, cyclohexanesulfonic acid, 3-cyclohexylaminopropanesulfonic acid alicyclic sulfonic acid compounds, and the like.

Preferred are one or more types selected from the group that consists of benzenesulfonic acid, dodecylbenzenesulfonic acid, methanesulfonic acid, p-phenolsulfonic acid, p-toluenesulfonic acid and (poly)styrenesulfonic acid, and the like.

### (Organic Phosphonic Acid Compounds)

The organic phosphonic acid compounds are not specifically limited so long as they are compounds having one or more phosphonic acid groups (-PO₃H₂) in the molecular structure.

They include one or more types selected from the group that consists of, for example, 1-hydroxyethylidene-1,1-diphosphonic acid, 1-hydroxypropylidene-1,1-diphosphonic acid, 1-hydroxybutylidene-1,1-diphosphonic acid, aminotrimethylenephosphonic acid, methyldiphosphonic acid, nitrotrismethylenephosphonic acid, ethylenediamine tetramethylenephosphonic acid, ethylenediamine bismethylenephosphonic acid, hexamethylenediamine tetramethylenephosphonic acid, diethylenetriamine pentamethylenephosphonic acid, cyclohexanediamine tetramethylenephosphonic acid, carboxyethylphosphonic acid, phosphonoacetic acid, 2-phosphonobutane-1,2,4-tricarboxylic acid, 2,3-dicarboxypropane-1,1-diphosphonic acid, phosphonobutylic acid, phosphonopropionic acid, sulfonylmethylphosphonic acid, N-carboxymethyl-N,N-dimethylenephosphonic acid, N,N-dicarboxymethyl-N-methylenephosphonic acid, 2-ethylhexyl acid phosphate, stearyl acid phosphate, benzenephosphonic acid, and the like.

The organic phosphonic acid compounds may be surfactants having phosphoric acid groups (-PO₄H₂) in the molecular structure.

For the surfactants having phosphoric acid groups, those having polyoxyethylene groups or phenyl groups in the molecular structure are preferred. They include one or more types selected from the group that consists of, for example, polyoxyethylene alkyl phenyl ether phosphoric acid, polyoxyethylene alkyl ether phosphoric acid, dipolyoxypropylene lauryl ether phosphoric acid, dipolyoxyethylene oleyl ether phosphoric acid, dipolyoxyethyleneoxypropylene lauryl ether phosphoric acid, dipolyoxypropylene oleyl ether phosphoric acid, lauryl phosphoric acid ammonium, octyl ether phosphoric acid ammonium, cetyl ether phosphoric acid ammonium, polyoxyethylene lauryl ether phosphoric acid, polyoxyethyleneoxypropylene lauryl ether phosphoric acid, polyoxypropylene lauryl ether phosphoric acid, polyoxyethylenetristyryl phenyl ether phosphoric acid, polyoxyethyleneoxypropylenetristyryl phenyl ether phosphoric acid, polyoxypropylenetristyryl phenyl ether phosphoric acid, and the like.

For the surfactants having phosphoric acid groups, one or more types selected from the group that consists of those commercially available under the product names of PHOSPHANOL manufactured by Toho Chemical Industry Co., Ltd., DISPERBYK manufactured by BYK Japan K.K., and the like, may be used.

### (Content of (c) Organic Acid Compound)

The content of (c) organic acid compound in a conductive resin composition satisfying requirement (A) above, of the conductive resin composition conforming to the present invention, is not specifically limited. Assuming that the total amount of (a) tin powder, (b) epoxy resin, and (c) organic acid compound represents 100% by mass, it is 0.1% by mass or higher, for example, or preferably 0.3% by mass or higher, or more preferably 0.5% by mass or higher, and 9.4% by mass or lower, for example, or preferably 8.0% by mass or lower, or more preferably 7.0% by mass or lower.

If the content of (c) organic acid compound relative to the total amount, 100% by mass, of (a) tin powder, (b) epoxy resin and (c) organic acid compound is under 0.1% by mass, the formation of film may be hindered, bonding strength of the coating film may drop, curing may take time, etc., while a content exceeding 9.4% by mass may lead to a drop in conductivity and rise in volume resistivity or a failure of the LED to turn on in the LED lighting test described in Examples A to D, hindered formation of film, etc.

The content of (c) organic acid compound in a conductive resin composition satisfying requirement (B) above, of the conductive resin compositions conforming to the present invention, is not specifically limited. Assuming that the total amount of (a) tin powder, (b) epoxy resin, (c) organic acid compound, and (d) curing agent represent 100% by mass, it is 0.1% by mass or higher, for example, or preferably 0.3% by mass or higher, or more preferably 0.5% by mass or higher, and 9.4% by mass or lower, for example, or preferably 8.0% by mass or lower, or more preferably 7.0% by mass or lower.

If the content of (c) organic acid compound relative to the total amount, 100% by mass, of (a) tin powder, (b) epoxy resin, (c) organic acid compound, and (d) curing agent is under 0.1% by mass, the formation of film may be hindered, bonding strength of the coating film may drop, curing may take time, etc., while a content exceeding 9.4% by mass may lead to a drop in conductivity and rise in volume resistivity or a failure of the LED to turn on in the LED lighting test described in Examples A to D, hindered formation of film, etc.

Of the conductive resin compositions conforming to the present invention, the conductive resin composition satisfying requirement (B) above contains (d) curing agent, and the (d) curing agent includes one or more types selected from (d1) acid anhydride-based curing agents, (d2) thiol-based curing agents, and (d3) phenol-based curing agents. The (d1) acid anhydride-based curing agents, (d2) thiol-based curing agents, and (d3) phenol-based curing agents are explained below.

### <(d1) Acid Anhydride-based Curing Agents>

The (d1) acid anhydride-based curing agents are not specifically limited so long as they are compounds having one or more carboxylic acid anhydride groups (-C(=O)-O-C(=O)-) in the molecular structure.

The (d1) acid anhydride-based curing agents are obtained through intermolecular dehydration between two organic carboxylic acid molecules and/or intramolecular dehydration within one organic carboxylic acid molecule. Under the present invention, they include one or more types selected from the group that consists of, for example, those obtained through intermolecular dehydration of organic monocarboxylic acids and others obtained through intramolecular dehydration and/or intermolecular dehydration of organic polycarboxylic acids, of the aforementioned organic carboxylic acids. They include one or more types selected from the group that consists of, for example, aliphatic monocarboxylic acid anhydrides, aliphatic polycarboxylic acid anhydrides, alicyclic polycarboxylic acid anhydrides, aromatic polycarboxylic acid anhydrides, and the like.

Preferred are one or more types selected from the group that consists of acetic acid anhydrides, propionic acid anhydrides, oxalic acid anhydrides, maleic acid anhydrides, phthalic acid anhydrides, benzoic acid anhydrides, succinic acid anhydrides, 2-methylsuccinic acid anhydrides, trimellitic acid anhydrides, pyromellitic acid anhydrides, tetrahydrophthalic acid anhydrides, methyltetrahydrophthalic acid anhydrides, hexahydrophthalic acid anhydrides, methylhexahydrophthalic acid anhydrides, (poly)adipic acid anhydrides, (poly)azelaic acid anhydride, (poly)sebacic acid anhydrides, norbornene-2,3-dicarboxylic acid anhydrides, methyl-5-norbornene-2,3-dicarboxylic acid anhydrides, and the like.

Also, polyacid polyanhydrides expressed by structural formula (1) below may be used. Such polyacid polyanhydrides are obtained through intermolecular dehydration condensation reaction of long-chain aliphatic dicarboxylic acids.

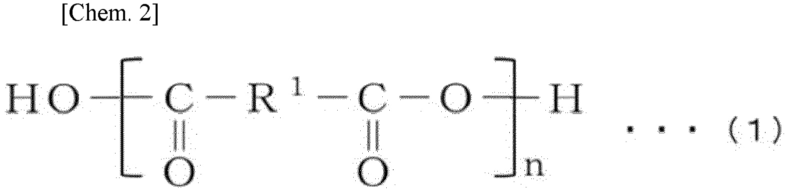

(In structural formula (1), R¹ is a straight-chain or branched hydrocarbon group with 10 or more but no more than 40 carbon atoms.)

Specific examples of the polyacid polyanhydrides expressed by structural formula (1) include, for example, those expressed by structural formulas (2) to (4) below.

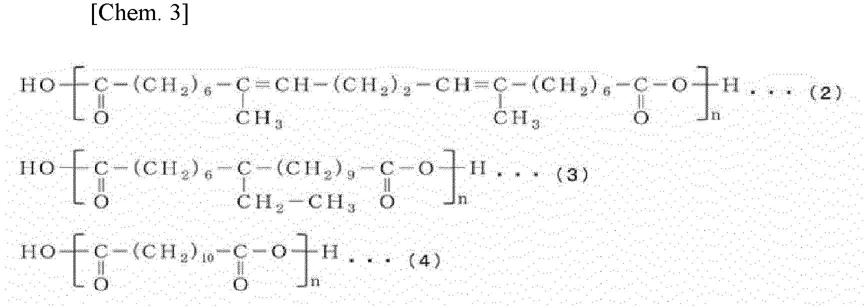

The polyacid polyanhydrides include, for example, one or more types selected from SL-12AH, SL-20AH, SB-20AH, IPU-22AH, and ST-2PAH, manufactured by Okamura Oil Mill, Ltd., and the like. In particular, one or more types selected from SB-20AH, IPU-22AH and ST-2PAH that are liquid at 25°C are preferred.

The content of (d1) acid anhydride-based curing agents in the conductive resin composition is not specifically limited. Relative to 1 epoxy group equivalent of the epoxy resins, the acid anhydride groups account for 0.05 equivalent or more, for example, or preferably 0.1 equivalent or more, and 1.5 equivalent or less, for example, or preferably 1.3 equivalent or less, or more preferably 1.05 equivalent or less. Most preferably they account for 1.0 equivalent. If they account for less than 0.05 equivalent relative to 1 epoxy group equivalent, curability of the conductive resin composition may drop and curing may take time, or the coating film may encounter curing problems; if they account for over 1.5 equivalent, the effect of excessive unreacted products of curing agents may cause the coating film to encounter curing problems, resulting in lower curing film hardness and drop in the reliability of conductive connection.

Also, the content of (d1) acid anhydride-based curing agents in the conductive resin composition is 5 parts by mass or more, for example, or preferably 10 parts by mass or more, or more preferably 15 parts by mass or more, and 250 parts by mass or less, for example, or preferably 200 parts by mass or less, or more preferably 180 parts by mass or less, relative to 100 parts by mass of the epoxy resins. If the content of (d1) acid anhydride-based curing agents is under 5 parts by mass relative to 100 parts by mass of the epoxy resins, curability of the conductive resin composition may drop and curing may take time, while a content exceeding 250 parts by mass may prevent the conductive resin composition from solidifying, and film from forming.

### <(d2) Thiol-based Curing Agents>

The (d2) thiol-based curing agents include thiol compounds having, in the molecular structure, one or more, or preferably two or more, thiol groups that can react with epoxy groups. For (d2) thiol-based curing agents, polyfunctional thiol compounds with 2 to 6 thiol groups in the molecular structure (bifunctional to hexafunctional) are preferred, and polyfunctional thiol compounds with 3 to 6 thiol groups in the molecular structure (trifunctional to hexafunctional) are more preferred. Although the thiol equivalent is not specifically limited, it is 50 g/eq or higher, for example, or preferably 70 g/eq or higher, and 200 g/eq or lower, for example, or preferably 150 g/eq or lower, in the case of low-molecular thiol-based curing agents. It is 250 g/eq or higher, for example, or preferably 400 g/eq or higher, and 5,000 g/eq or lower, for example, or preferably 3,000 g/eq or lower, in the case of high-molecular thiol-based curing agents.

The (d2) thiol-based curing agents include, for example, trimethylolpropane tris(3-mercaptopropionate) (abbreviation: TMTP), pentaerythritol tetrakis(3-mercaptopropionate) (abbreviation: PEMP), dipentaerythritol hexakis(3-mercaptopropionate) (abbreviation: DPMP), tris-[(3-mercaptopropionyloxy)-ethyl]-isocyanurate (abbreviation: TEMPIC), tris(3-mercaptopropyl)isocyanurate (abbreviation: TMPIC), ethylene glycol bisthioglycolate (abbreviation: EGTG), trimethylolpropane tristhioglycolate (abbreviation: TMTG), pentaerythritol tetrakisthioglycolate (abbreviation: PETG), pentaerythritol tetrakis(3-mercaptobutylate), 1,4-bis(3-mercaptobutylyloxy)butane, 1,3,5-tris(3-mercaptobutylyloxyethyl)-1,3,5-triazine-2,4,6(1H,3H,5H)-trione, trimethylolpropane tris(3-mercaptobutylate) (abbreviation: TPMB), trimethylolethane tris(3-mercaptobutylate) (abbreviation: TEMB), 1,3,4,6-tetrakis(2-mercaptoethyl) glycoluril, 1,3,4,6-tetrakis(2-mercaptopropyl) glycoluril, 4,4'-isopropylidene bis[(3-mercaptopropoxy)benzene], 1,3,5-triazine-2,4,6-trithiol, and other thiol compounds (polyfunctional thiol compounds), polysulfide polymers having thiol groups, and the like. Any one type of these may be used alone, or two or more types may be combined.

To be specific, they include, for example, polyfunctional thiols manufactured by SC Organic Chemical Co., Ltd. (TMMP-LV, PEMP-LV, DPMP, TEMPIC, PEMP, etc.), polyfunctional thiols manufactured by Toray Fine Chemicals Co., Ltd. (QE-340M, LP-2, LP-3, LP-55, LP-31, etc.), polyfunctional thiols manufactured by Shikoku Chemicals Corporation (TS-G, C3TS-G, etc.), polyfunctional thiols manufactured by Showa Denko K.K. (Karenz MT Series (PE-1, BD-1, NR-1, TPMB, TEMB, etc.)), polyfunctional thiols manufactured by Yodo Kagaku Co., Ltd. (OTG, EGTG, TMTG, PETG, 3-MPA, TMTP, PETP, etc.), and the like.

The content of (d2) thiol-based curing agents in the conductive resin composition is not specially limited. Relative to 1 epoxy group equivalent of the epoxy resins, the thiol groups account for 0.05 equivalent or more, for example, or preferably 0.2 equivalent or more, and 1.5 equivalent or less, for example, or preferably 1.2 equivalent or less, or more preferably 1.1 equivalent or less, or yet more preferably 1.0 equivalent or less. If they account for less than 0.1 equivalent relative to 1 epoxy group equivalent, curability of the conductive resin composition may drop and curing may take time, or the coating film may encounter curing problems; if they account for over 1.5 equivalent, the effect of excessive unreacted products of curing agents may cause the coating film to encounter curing problems, resulting in lower curing film hardness and drop in the reliability of conductive connection.

Also, the content of the (d2) thiol-based curing agents in the conductive resin composition is 5 parts by mass or more, for example, or preferably 10 parts by mass or more, or more preferably 15 parts by mass or more, and 250 parts by mass or less, for example, or preferably 200 parts by mass or less, or more preferably 180 parts by mass or less, relative to 100 parts by mass of the epoxy resins. If the content of (d2) thiol-based curing agents is under 5 parts by mass relative to 100 parts by mass of the epoxy resins, curability of the conductive resin composition may drop and curing may take time, while a content exceeding 250 parts by mass may prevent the conductive resin composition from solidifying and film from forming.

### <(d3) Phenol-based Curing Agents>

The (d3) phenol-based curing agents include compounds having, in the molecular structure, one or more, or preferably two or more, phenolic hydroxyl groups that can react with epoxy groups. Examples include bisphenol A, bisphenol B, bisphenol F, bisphenol AD, bisphenol S and other bisphenols; biphenol, tetramethyl biphenol and other biphenols; hydroxyphenol, bis(4-hydroxyphenyl) ether and other phenols; alkylphenols; 2,6-bis[(2-hydroxyphenyl)methyl]-phenol, phenol biphenylene novolac (biphenyl aralkyl phenol), and other phenol novolacs; o-cresol novolac, m-cresol novolac, p-cresol novolac, and other cresol novolacs; triphenylmethanes; tetrakis phenols; phenol resins; phenol novolac resins; biphenyl aralkyl-type phenol resins; etc. Any one type of these may be used alone, or two or more types may be combined.

To be specific, they include 4,4',4"-trihydroxytriphenylmethane, 4,4',4",4‴-methanetetrayltetraphenol, 1,1,2,2-tetrakis(4-hydroxyphenyl)ethane, MEH-8005 manufactured by Meiwa Plastic Industries, Ltd., KAYAHARD GPH-65 and KAYAHARD GPH-103 manufactured by Nippon Kayaku Co., Ltd., BRG-555, BRG-556, BRG-557, BRG-558, CRG-951, and TAM-005, manufactured by Aica Kogyo Co., Ltd., and the like.

Under the present invention, phenol resins are used favorably, for example. Such phenol resins include those whose hydroxyl group equivalent is 50 g/eq or higher, for example, or preferably 100 g/eq or higher, or more preferably 300 g/eq or higher.

Under the present invention, phenol novolac and other phenol resins are used favorably as the (d3) phenol-based curing agents.

The content of the (d3) phenol-based curing agents in the conductive resin composition is not specially limited. Relative to 1 epoxy group equivalent of the epoxy resins, the phenol groups account for 0.1 equivalent or more, for example, or preferably 0.2 equivalent or more, and 1.5 equivalent or less, for example, or preferably 1.2 equivalent or less, or more preferably 1.1 equivalent or less, or yet more preferably 1.0 equivalent or less. If they account for less than 0.1 equivalent relative to 1 epoxy group equivalent, curability of the conductive resin composition may drop and curing may take time, or the coating film may encounter curing problems; if they account for over 1.5 equivalent, the effect of excessive unreacted products of curing agents may cause the coating film to encounter curing problems, resulting in lower curing film hardness and drop in the reliability of conductive connection.

Also, the content of the (d3) phenol-based curing agents in the conductive resin composition is 5 parts by mass or more, for example, or preferably 10 parts by mass or more, or more preferably 15 parts by mass or more, and 250 parts by mass or less, for example, or preferably 200 parts by mass or less, or more preferably 180 parts by mass or less, relative to 100 parts by mass of the epoxy resins. If the content of (d3) phenol-based curing agents is under 5 parts by mass relative to 100 parts by mass of the epoxy resins, curability of the conductive resin composition may drop and curing may take time, while a content exceeding 250 parts by mass may prevent the conductive resin composition from solidifying and film from forming.

### <Other Components>

The conductive resin composition proposed by the present invention can have one or more types of various additives mixed therein as necessary, that are selected from the group that consists of solvents, adhesion-imparting agents, viscoelasticity-adjusting agents, wetting and dispersing agents, curing accelerators (curing catalysts), reactive diluents, conductive powders other than the tin powder, resins other than the epoxy resins, antioxidants, pigments, fillers, anticorrosive agents, defoaming agents, coupling agents, anti-settling agents, leveling agents, heavy metal inactivators, surfactants, pH-adjusters, UV absorbents, flame retardants, adhesion agents, etc.

Of the conductive resin compositions conforming to the present invention, the conductive resin composition satisfying requirement (A) above may contain, as necessary, one or more types of curing agents that cure the epoxy resins.

Of the conductive resin compositions conforming to the present invention, the conductive resin composition satisfying requirement (B) above may contain, as necessary, one or more types of curing agents that cure the epoxy resins other than those of (d1) to (d3) above.

### (Solvents)

The conductive resin composition proposed by the present invention may contain solvents. When solvents are contained, fluidity of the conductive resin composition can be improved, contributing to improved workability. Also, by mixing the conductive resin composition with solvents, conductive resin pastes, conductive inks, conductive adhesives, circuit connection materials, etc., can be constituted.

For the solvents, any of one or more types selected from the group that consists of water and various organic solvents may be used. The organic solvents include one or more types selected from the group that consists of, for example, ethyl alcohol, propyl alcohol, butyl alcohol, pentyl alcohol, hexyl alcohol, heptyl alcohol, octyl alcohol, nonyl alcohol, decyl alcohol, ethylene glycol monomethyl ether, ethylene glycol monoethyl ether, ethylene glycol monopropyl ether, ethylene glycol monobutyl ether, propylene glycol monomethyl ether, propylene glycol monoethyl ether, propylene glycol monopropyl ether, propylene glycol monobutyl ether, dipropylene glycol monomethyl ether, ethyl carbitol, butyl carbitol, 2-ethyl-1,3-hexanediol, methyl methoxy butanol, α-terpineol, β-terpineol, hexylene glycol, benzyl alcohol, 2-phenylethyl alcohol, isopalmityl alcohol, isostearyl alcohol, lauryl alcohol, ethylene glycol, propylene glycol, or glycerin and other alcohols; acetone, methyl ethyl ketone, methyl isobutyl ketone, cyclohexane, diacetone alcohol (4-hydroxy-4-methyl-2-pentanone), 2-octanone, isophorone (3,5,5-trimethyl-2-cyclohexen-1-one) or diisobutyl ketone (2,6-dimethyl-4-heptanone) and other ketone-based solvents; ethyl acetate, butyl acetate, diethyl phthalate, dibutyl phthalate, acetoxyethane, methyl butyrate, methyl hexanoate, methyl octanoate, methyl decanoate, methyl cellosolve acetate, ethylene glycol monobutyl ether acetate, propylene glycol monomethyl ether acetate, ethyl diglycol acetate, 1,2-diacetoxyethane and other ester-based solvents; tetrahydrofuran, dimethyl ether, diethyl ether, dipropyl ether, ethylene glycol dimethyl ether, ethylene glycol diethyl ether, ethylene glycol dibutyl ether, propylene glycol dimethyl ether, ethoxy ethyl ether, 1,2-bis(2-diethoxy)ethane or 1,2-bis(2-methoxyethoxy)ethane and other ether-based solvents; 2-(2-buthoxyethoxy)ethane acetate and other ester ethers; 2-2(methoxyethoxy)ethanol and other ether alcohol-based solvents; benzene, toluene, xylene, n-paraffin, isoparaffin, dodecyl benzene, terpene oil, kerosene, or light oil and other hydrocarbon-based solvents; acetonitrile, propionitrile, and other nitrile-based solvents; dimethylacetamide, N,N-dimethylformaldehyde, N-methyl-2-pyrrolidone, and other nitrogen-containing polar solvents; silicone oil-based solvents, and the like.

If solvents are used, their content is not specifically limited and may be adjusted as deemed appropriate so that the viscosity of the conductive resin composition will be at a level that allows for proper coating, printing, etc., on base materials and/or a level that allows for proper impregnation in porous media.

### (Adhesion-imparting Agents)

The conductive resin composition proposed by the present invention may contain adhesion-imparting agents. When adhesion-imparting agents are contained, the conductive resin composition, coated on a base material, can have better adhesion, etc., with the base material. The adhesion-imparting agents include, for example, triazole compounds, thiazole compounds, triazine compounds, polymers having functional groups (carboxylic acid groups, amino groups, hydroxyl groups, etc.) and salt thereof, and the like. Any one type of these may be used alone, or two or more types may be combined.

The adhesion-imparting agents include, for example, the BYK Series (4509, 4510, 4512, etc.) manufactured by BYK Japan K.K.

### (Viscoelasticity-adjusting Agents)

The conductive resin composition proposed by the present invention may contain viscoelasticity-adjusting agents (rheology-controlling agents). When viscoelasticity-adjusting agents are contained, the viscoelasticity (rheology) of the conductive resin composition can be prepared to help improve workability, etc.

The viscoelasticity-adjusting agents (rheology-controlling agents) include polyamide-based, aminoplast-based, polycarboxylic acid-based, urethane-based, cellulose-based, inorganic layered compound-based, and other viscoelasticity-adjusting agents (rheology-controlling agents). For example, they include the RHEOBYK Series (H370, H400, H600, H600VF, 100, 405, 410, 411, 415, 430, 431, 440, 7410ET, etc.) manufactured by BYK Japan K.K.; DISPARLON Series (AQ-600, AQH-800, 3600N, 3900EF, etc.) manufactured by Kusumoto Chemicals, Ltd.; SN THICKENER Series (613, 617, 618, 630, 634, 636, 621N, 623N, etc.) manufactured by San Nopco Limited; ADEKA NOL Series (UH-814N, UH-752, UH-750, UH-462, etc.) manufactured by ADEKA Corporation; HEC DAICEL Series (SP600N, etc.) manufactured by Daicel Corporation; BENTONE HD manufactured by Elementis Japan K.K., and the like. Any one type of these may be used alone, or two or more types may be combined.

### (Wetting and Dispersing Agents)

The conductive resin composition proposed by the present invention may contain wetting and dispersing agents as necessary to prevent cohesion of the tin powder.

Specific examples of the wetting and dispersing agents include the SOLSPERSE Series (9000, 12000, 17000, 20000, 21000, 24000, 26000, 27000, 28000, 32000, 35100, 54000, etc.) manufactured by Lubrizol Japan Ltd., EFKA Series (4008, 4009, 4010, 4015, 4046, 4047, 4060, 4080, 7462, 4020, 4050, 4055, 4400, 4401, 4402, 4403, 4300, 4330, 4340, 6220, 6225, 6700, 6780, 6782, 8503, etc.) manufactured by EFKA Additives, B.V., AJISPER Series (PA111, PB711, PB821, PB822, PN411, etc.) manufactured by Ajinomoto Fine-Techno Co., Inc., DISPERBYK Series (101, 106, 108, 116, 130, 140, 145, 161, 163, 166, 168, 171, 180, 192, 2000, 2001, 2020, 2025, 2070, 2152, 2155, 2164, 220S, 300, 320, 340, 378, 380N, 410, 425, 430, etc.) manufactured by BYK Japan K.K., and the like. Any one type of these may be used alone, or two or more types may be combined.

### (Curing Accelerators (Curing Catalysts))

The curable resin composition proposed by the present invention may contain curing accelerators (curing catalysts) for the purpose of accelerating the curing of the epoxy resins and curing agents. The curing accelerators are not specifically limited, but include amine-based curing accelerators, guanidine-based curing accelerators, imidazole-based curing accelerators, phosphonium-based curing accelerators, and the like. Any one type of these may be used alone, or two or more types may be combined. They include, for example, triethylamine, tripropylamine, tributylamine, dimethylbutylamine, dimethylpentylamine, dimethylcyclohexylamine and other aliphatic tertiary amines, dimethylbenzylamine, dimethylaminomethylphenol, dimethylamino-p-cresol, piperidine, α-picoline, pyridine, 4-dimethylaminopyridine, 2,4,6-tris(dimethylaminomethyl)phenol, 3,4,5-tris(dimethylaminomethyl)phenol, 2-methylimidazole, 2-ethyl-4-methylimidazole, 2-undecylimidazole, 2-phenylimidazole, 1-benzyl-2-methylimidazole, 1-cyanoethyl-2-methylimidazole, 1-cyanoethyl-2-ethyl-4-methylimidazole, N-aminoethylpiperazine, 1,3,6-trisaminomethylhexane, m-xylenediamine, p-xylenediamine, N-(2-aminoethyl)piperazine, m-phenylenediamine, p-phenylenediamine, diaminophenylmethane, methylenedianiline, 2,4-tluenediamine, 2,4-diaminoanizole, 2,4-toluenediamine, 2,4-diaminodiphenylamine, 4,4'-methylendianiline, 1,3-diaminocyclohexane, 3,9-bis(3-aminopropyl)-2,4,8,10-tetrapiro[5.5]undecane, 1,8-diazabicyclo[5.4.0]undecane-7, 1,5-diazabicyclo[4.3.0]-nonene, polyamine, polyamide amine, polyamide, modified polyamine, modified polyamide amine, modified polyamide, and other amine-based compounds; dicyandiamide, 1-methylguanidine, 1-ethylguanidine, 1-cyclohexylguanidine, 1-phenylguanidine, 1-(o-tolyl)guanidine, dimethylguanidine, diphenylguanidine, di(o-tolyl)guanidine, trimethylguanidine, tetramethylguanidine, pentamethylguanidine, 1,5,7-triazabicyclo[4.4.0]deca-5-en, 7-methyl-1,5,7-triazabicyclo[4.4.0]deca-5-en, 1-methylbiguanide, 1-ethylbiguanide, 1-n-butylbiguanide, 1-n-octadecylbiguanide, 1,1-dimethylbiguanide, 1,1-diethylbiguanide, 1-cyclohexylbiguanide, 1-arylbiguanide, 1-phenylbiguanide, 1-(o-tolyl)biguanide, and other guanidine-based compounds; tetraphenylphosphonium bromide, tetrabutylphosphonium bromide, butyltriphenylphosphonium bromide, tetraphenylphosphonium iodide, tetrabutylphosphonium iodide, butyltriphenylphosphonium iodide, tetraphenylphosphonium tetraphenylborate, tetrabutylphosphonium tetraphenylborate, butyltriphenylphosphonium tetraphenylborate, tetraphenylphosphonium tetrabutylborate, tetrabutylphosphonium tetrabutylborate, butyltriphenylphosphonium tetrabutylborate, tetraphenylphosphonium acetate, tetrabutylphosphonium acetate, butyltriphenylphosphonium acetate, tetrabutylphosphonium tetrafluoroborate, tetrabutylphosphonium hexafluorophosphate, methyltributylphosphonium dimethylphosphate, tetrabutylphosphonium acetate, tetrabutylphosphonium hydroxide, and other phosphonium-based compounds; compounds containing titanium, cobalt, and other transition metals; etc. Any one type of these may be used alone, or two or more types may be combined.

### (Reactive Diluents)

The curable resin composition proposed by the present invention may contain reactive diluents for the purpose of adjusting viscosity, curability, etc., of the conductive resin composition. The reactive diluents are not specifically limited, but include one or more types selected from compounds having one epoxy group in the molecular structure, compounds having one or more oxetane group in the molecular structure, etc. For example, they include glycidyl phenyl ether, glycidyl lauryl ether, 2-phenylphenol glycidyl ether, allyl glycidyl ether, 4-tertbutylphenyl glycidyl ether, N-glycidylphthalimide, 2-ethylhexyl glycidyl ether, 2-ethylhexyl glycidyl ether, YED111N, YED111AN, YED188 manufactured by Mitsubishi Chemical Corporation, ADEKA GLYCIROL ED-502, ADEKA GLYCIROL ED-502S, ADEKA GLYCIROL ED-509E, ADEKA GLYCIROL ED-509S, ADEKA GLYCIROL ED-529 manufactured by ADEKA Corporation, DENACOL EX-145, DENACOL EX-171, DENACOL EX-192 manufactured by Nagase ChemteX Corporation, EPOLITE M-1230, EPOLITE 100MF manufactured by Kyoeisha Chemical Co., Ltd., ARON OXETANE OXT-101, ARON OXETANE OXT-212, ARON OXETANE OXT-121, ARON OXETANE OXT-221 manufactured by Toagosei Co., Ltd., ETERNACOLL EHO, ETERNACOLL HBOX, ETERNACOLL OXMA, ETERNACOLL OXBP manufactured by UBE Corporation, and the like. Any one type of these may be used alone, or two or more types may be combined.

### (Conductive Powders)

The conductive resin composition proposed by the present invention may contain conductive powders other than the tin powder. These conductive powders include one or more types selected from the group that consists of, for example, unleaded solder powder, gold powder, gold alloy powder, silver powder, silver alloy powder, copper powder, copper alloy powder, silver-coated copper powder, silver-coated copper alloy powder, silver-coated silica powder, silver-coated nickel powder, silver-coated aluminum powder, silver-coated potassium titanate powder, silver-coated carbon powder, resin core metal-covered fine particles, nickel powder, conductive carbon powder, carbon nanotubes, graphene, and the like.

For example, the unleaded solder powder is not specifically limited so long as it is a powder of a solder not containing lead by more than the inevitably contained amount, in consideration of the effects on workers, users, the environment, etc. The melting point of the unleaded solder powder is preferably 300°C or lower, or more preferably 240°C or lower, or yet more preferably 50 to 240°C. If the melting point of the unleaded solder powder exceeds 300°C, the connected members such as circuit boards, electronic components, etc., may undergo thermal failure or deterioration. If the melting point is under 50°C, mechanical strength may weaken to cause reliability of conductive connections to drop.

### (Resins)

The conductive resin composition proposed by the present invention may contain resins other than the epoxy resins. These resins may be either thermoplastic resins or thermosetting resins, of which one type, or two or more types, may be used.

The thermoplastic resins include one or more types selected from the group that consists of, for example, polyvinyl butyral-based resins, acrylic-based resins, polyester-based resins, phenoxy resins, polyimide-based resins, polyolefin-based resins, thermoplastic polyurethane-based resins, polyamide-based resins, polycarbonate-based resins, polyphenylene ether-based resins, polyvinyl ether-based resins, polyvinyl alcohol-based resins, polyvinyl acetate-based resins, ionomer resins, polyvinyl pyrrolidone-based resins, terpene-based resins, and the like.

The thermosetting resins include one or more types selected from the group that consists of, for example, resol-type phenol-based resins, polyimide-based resins, xylene-based resins, polyurethane-based resins, melamine-based resins, urea-based resins, furan resins, isocyanate-based resins, urea resins, and the like.

Under the present invention, preferably one or more types selected from the group that consists of polyvinyl butyral-based resins, resol-type phenol-based resins, acrylic-based resins, polyester-based resins, phenoxy resins, polyimide-based resins, and xylene-based resins are contained. Of these, polyvinyl butyral-based resins are used favorably from the viewpoints of the conditions of film formation, connection reliability, adhesion to base materials, etc.

### (Antioxidants)

The conductive resin composition proposed by the present invention may contain antioxidants. When antioxidants are contained, they can help improve heat resistance, anti-yellowing property, etc., of the cured products of the conductive resin composition. The antioxidants are not specifically limited so long as they are compounds having antioxidation function, and any known or common antioxidants may be used. For example, they include hindered phenol compounds and other phenol-based antioxidants, hydroquinone and other quinone-based antioxidants, phosphorus-based antioxidants, sulfur-based antioxidants, hindered amine compounds and other hindered amine-based antioxidants, and the like. Any one type of these may be used alone, or two or more types may be combined. They include one or more types selected from the group that consists of, for example, 2,2-methylene-bis(4-methyl-6-tert-butylphenol), catechol, tert-butyl catechol, 2-butyl-4-hydroxyanisole, 2,6-di-tert-butyl-p-cresol, 2,4-di-tert-butyl-6-methylphenol, 2-tert-butyl-4-methylphenol, 2,4-di-tert-butylphenol, 2,4-di-tert-pentylphenol, bis-[3,3-bis-(4'-hydroxy-3'-tert-butylphenyl)-butanoic acid]-glycol ester, 2-tert-butyl-6-(3-tert-butyl-2-hydroxy-5-methylbenzyl)-4-methylphenyl acrylate, 2-[1-(2-hydroxy-3,5-di-tert-pentylphenyl)ethyl]-4,6-di-tert-pentylphenyl acrylate, 4,4'-butylidenebis(6-tert-butyl-3-methylphenol), 2,2'-butylidenebis(4,6-di-tert-butylphenol), 4,4'-thiobis(6-tert-butyl-3-methylphenol), 3,9-bis[2-[3-(3-tert-butyl-4-hydroxy-5-methylphenyl)propionyloxy]-1,1-dimethylethyl]-2,4,8,10-tetraoxaspiro[5.5]undecane, pentaerythritol tetrakis[3-(3,5-di-tert-butyl-4-hydroxyphenyl)propionate], thiodiethylene bis[3-(3,5-di-tert-butyl-4-hydroxyphenyl)propionate], octadecyl-3-(3,5-di-tert-butyl-4-hydroxyphenyl)propionate, N,N'-hexane-1,6-diylbis[3-(3,5-di-tert-butyl-4-hydroxyphenyl)propionamide], benzenepropanoic acid, 3,5-bis(1,1-dimethylethyl)-4-hydroxy, C₇ to C₉ side-chain alkyl esters, 2,4-dimethyl-6-(1-methylpentadecyl)phenol, diethyl[[3,5-bis(1,1-dimethylethyl)-4-hydroxyphenyl]methyl]phosphonate, 3,3',3",5,5',5"-hexa-tert-butyl-a,a',a"-(mesitylene-2,4,6-tolyl)tri-p-cresol, calcium diethyl bis[[3,5-bis(1,1-dimethylethyl)-4-hydroxyphenyl]methyl]phosphonate, 4,6-bis(octylthiomethyl)-o-cresol, ethylenebis(oxyethylene)bis[3-(5-tert-butyl-4-hydroxy-m-tolyl)propionate], triethylene glycol-bis[3-(3-tert-butyl-5-methyl-4-hydroxyphenyl)propionate], hexamethylene bis[3-(3,5-di-tert-butyl-4-hydroxyphenyl)propionate, 1,3,5-trimethyl-2,4,6-tris(3,5-di-tert-butyl-4-hydroxybenzyl)benzene, 1,3,5-tris(3,5-di-tert-butyl-4-hydroxybenzyl)-1,3,5-triazine-2,4,6(1H,3H,SH)-trione, 1,3,5-tris[(4-tert-butyl-3-hydroxy-2,6-xylyl)methyl]-1,3,5-triazine-2,4,6(1H,3H,SH)-trione, N-phenylbenzeneamine and 2,4,6-trimethylpentene reaction products, 2,6-di-tert-butyl-4-(4,6-bis(octylthio)-1,3,5-triazine-2-ylamino)phenol, picric acid, citric acid, and other phenol-based antioxidants; β-naphthoquinone, 2-methoxy-1,4-naphthoquinone, methyl hydroquinone, hydroquinone, hydroquinone monomethyl ether, mono-tert-butyl hydroquinone, 2,5-di-tert-butyl hydroquinone, p-benzoquinone, 2,5-diphenyl-p-benzoquinone, 2,5-di-tert-butyl-p-benzoquinone and other quinone-based antioxidants; tris(2,4-di-tertbutylphenyl)phosphite, tris[2-[[2,4,8,10-tetra-tert-butylbenzo[d,f] [1 ,3,2] dioxaphosphephine-6-yl] oxy] ethyl] amine, bis(2,4-di-tertbutylphenyl) pentaerythritol diphosphite, bis[2,4-bis(1,1-dimethylethyl)-6-methylphenyl]ethyl ester phosphorous acid, tetrakis(2,4-di-tert-butylphenyl)[1,1-bisphenyl -4,4' -diylbisphosphonite, 6- [3 -(3 -tert-butyl-4-hydroxy-5 - methylphenyl)propoxy]-2,4,8,10-tetra-tert-butyldibenzo[d,f][1,3,2]dioxaphosphephine, and other phosphorus-based antioxidants; dilauryl 3,3'-thiodipropionate, dimyristyl 3,3'-thiodipropionate, distearyl 3,3'-thiodipropionate, pentaerythrityl tetrakis(3-laurylthiopropionate), 2-mercaptobenzimidazole, and other sulfur-based antioxidants; phenothiazine and other amine-based antioxidants; lactone-based antioxidants; vitamin E-based antioxidants, and the like.

For the antioxidants, commercial products may also be used. For example, they include the IRGANOX Series manufactured by BASF SE, ADEKA STAB Series manufactured by ADEKA Corporation, NONFLEX Series manufactured by Seiko Chemical Co., Ltd., SUMILIZER Series manufactured by Sumitomo Chemical Co., Ltd., and the like.

### (Curing Agents for Curing Epoxy Resins)

Of the conductive resin compositions conforming to the present invention, the conductive resin composition satisfying requirement (A) above may contain curing agents for curing the epoxy resins, as necessary. These curing agents for curing the epoxy resins include one or more types selected from the group that consists of, for example, acid anhydride-based curing agents, thiol-based curing agents, phenol-based curing agents, amine-based curing agents, amide-based curing agents, and the like. Preferably the conductive resin composition proposed by the present invention contains curing agents that are liquid at 25°C, from the viewpoint of more effectively improving workability, ease of handling, etc. It should be noted that, if a conductive resin composition satisfying requirement (A) above, of the conductive resin compositions conforming to the present invention, uses amine-based curing agents as curing agents for curing the epoxy resins, it will be combined with one or more types of acid anhydride-based curing agents, thiol-based curing agents, and phenol-based curing agents.

Of the conductive resin compositions conforming to the present invention, the conductive resin composition satisfying requirement (B) above may contain curing agents for curing the epoxy resins other than those of (d1) to (d3) above, as necessary. Such curing agents include one or more types selected from the group that consists of, for example, amine-based curing agents, amide-based curing agents, and the like. Preferably the conductive resin composition proposed by the present invention contains curing agents that are liquid at 25°C, from the viewpoint of more effectively improving workability, ease of handling, etc.

Of the curing agents for curing the epoxy resins that may be contained as necessary in the conductive resin composition satisfying requirement (A) above, the acid anhydride-based curing agents, thiol-based curing agents, and phenol-based curing agents are such that the same (d1) acid anhydride-based curing agents, (d2) thiol-based curing agents, and (3) phenol-based curing agents above can be used, respectively.

### - Amine-based Curing Agents -

Of the curing agents for curing the epoxy resins that may be contained as necessary in the conductive resin composition proposed by the present invention, the amine-based curing agents include, for example, diethylenetriamine, triethylenetetramine, diethylaminopropylamine, menthanediamine, isophoronediamine, bis[4-amino-3-methyldicyclohexyl]methane, diaminodicyclohexylmethane, bis(aminomethyl)cyclohexane, m-xylylenediamine, metaphenylenediamine, diaminodiphenylmethane, diaminodiethyldiphenylmethane, and modified polyamines, polyamide amines, and the like, being modified products of the foregoing by epoxy adduct, Michael addition, or Mannich reaction, etc. Any one type of these may be used alone, or two or more types may be combined.

### - Content of Curing Agents for Curing Epoxy Resins -

The content of curing agents for curing the epoxy resins in a conductive resin composition satisfying requirement (A) above, of the conductive resin compositions conforming to the present invention, is not specifically limited. Regarding the conductive resin composition satisfying requirement (A) above, the conductive resin composition can be cured without using curing agents.

If the conductive resin composition satisfying requirement (A) above contains curing agents, the groups that react with the epoxy groups (such as hydroxy groups, thiol groups, amino groups, acid anhydride groups, etc.), in the curing agents, account for 0.1 equivalent or more, for example, or preferably 0.3 equivalent or more, or more preferably 0.9 equivalent or more, and 1.5 equivalent or less, for example, or preferably 1.2 equivalent or less, or more preferably 1.1 equivalent or less, relative to 1 epoxy group equivalent of the epoxy resins. Most preferably they account for 1.0 equivalent. If they account for under 0.1 equivalent relative to 1 epoxy group equivalent, curability of the conductive resin composition satisfying requirement (A) above may drop and curing may take time, or the coating film may encounter curing problems; if they account for over 1.5 equivalent, the effect of excessive unreacted products of curing agents may cause the coating film to encounter curing problems, resulting in lower curing film hardness and drop in the reliability of conductive connection.

Also, in the conductive resin composition satisfying requirement (A) above, the total amount of curing agents relative to 100 parts by mass of the epoxy resins may be adjusted to 5 parts by mass or more, for example, or preferably 10 parts by mass or more, or more preferably 15 parts by mass or more, and to 250 parts by mass or less, for example, or preferably 200 parts by mass or less, or more preferably 180 parts by mass or less. If the total amount of curing agents relative to 100 parts by mass of the epoxy resins is under 5 parts by mass, curability of the conductive resin composition satisfying requirement (A) above may drop and curing may take time; if it exceeds 250 parts by mass, the conductive resin composition may not become solid.

The content of curing agents for curing the epoxy resins other than the curing agents of (d1) to (d3) in a conductive resin composition satisfying requirement (B) above, of the conductive resin compositions conforming to the present invention, is not specifically limited. In the conductive resin composition satisfying requirement (B) above, curing agents for curing the epoxy resins other than those of (d1) to (d3) above may not be used.

If curing agents for curing epoxy resins other than the curing agents of (d1) to (d3) above are contained, the groups that react with the epoxy groups (such as hydroxy groups, amino groups, amide groups, etc.), in the curing agents, account for 0.1 equivalent or more, for example, or preferably 0.3 equivalent or more, or more preferably 0.9 equivalent or more, and 1.5 equivalent or less, for example, or preferably 1.2 equivalent or less, or more preferably 1.1 equivalent or less, relative to 1 epoxy group equivalent of the epoxy resins. Most preferably they account for 1.0 equivalent. If they account for under 0.1 equivalent relative to 1 epoxy group equivalent, curability of the conductive resin composition satisfying requirement (B) above may drop and curing may take time, or the coating film may encounter curing problems; if they account for over 1.5 equivalent, the effect of excessive unreacted products of curing agents may cause the coating film to encounter curing problems, resulting in lower curing film hardness and drop in the reliability of conductive connection.

Also, in the conductive resin composition satisfying requirement (B) above, the total amount of curing agents relative to 100 parts by mass of the epoxy resins may be adjusted to 5 parts by mass or more, for example, or preferably 10 parts by mass or more, or more preferably 15 parts by mass or more, and to 250 parts by mass or less, for example, or preferably 200 parts by mass or less, or more preferably 180 parts by mass or less. If the total amount of curing agents relative to 100 parts by mass of the epoxy resins is under 5 parts by mass, curability of the conductive resin composition may drop and curing may take time; if it exceeds 250 parts by mass, the conductive resin composition satisfying requirement (B) above may not become solid.

### <State of Conductive Resin Composition>

As for the state of the conductive resin composition proposed by the present invention, it can be in a powder, solid, paste-like, liquid (varnish-like) or other desired state. When used as conductive inks, conductive adhesives, and circuit connection materials, preferably the conductive resin composition is in a paste-like or liquid (varnish-like) state at room temperature (25°C).

The conductive resin composition proposed by the present invention is such that, when the materials are mixed under agitation using a mixer, etc., to prepare a paste-like or liquid (varnish-like) conductive resin composition, a conductive resin composition which is free of lumps, etc., and homogeneous can be formed.

### <Properties of Conductive Resin Composition>

The conductive resin composition proposed by the present invention has excellent curability. For example, by coating the conductive resin composition on a base material and then heat-treating (sintering) it for 5 to 300 minutes at 50°C to 250°C, a conductive film (dry coating film) can be formed easily.

The conductive resin composition proposed by the present invention has excellent conductivity. For example, a conductive film obtained by casting or coating the conductive resin composition on a releasable base material, drying, and then releasing the base material, has a volume resistivity of under 1.0 × 10⁻² Ω·cm. The volume resistivity of the conductive film is preferably under 8.0 × 10⁻³ Ω·cm, or more preferably under 1.0 × 10⁻³ Ω·cm. Here, the volume resistivity is obtained by the method described in Examples A to D.

The conductive resin composition proposed by the present invention, when made into a cured product, exhibits insulating property on the surface; however, it may exhibit good conductivity inside. For example, when the conductive resin composition is used to join connection members, a conductive connection can be formed between the connection members because, although the film of the conductive resin composition has insulating property on the surface (volume resistivity is 1.0 × 10⁻¹ Ω·cm or higher, making the surface virtually an insulating body), the interior exhibits conductivity. Here, to confirm that a conductive connection has been formed, it can be confirmed by the LED lighting test described in Examples A to D. Based on the above, it is considered that a cured product of the conductive resin composition is a structure formed like an electric wire with insulating film that exhibits insulating property on the surface and conductivity inside.

The conductive resin composition proposed by the present invention has excellent adhesion with respect to various types of base materials. For example, it has excellent adhesion to glass, metals, or plastics (such as polyester, etc.).

The conductive resin composition proposed by the present invention has a practical level of storage stability that allows it to be coated/printed, etc., after storage following manufacture.

### <Method for Preparing Conductive Resin Composition>

To prepare a conductive resin composition satisfying requirement (A) above, of the conductive resin compositions conforming to the present invention, it can be manufactured by adding to a mixing container in a desired order, and mixing together, the essential components including (a) tin powder, (b) epoxy resin, and (c) organic acid compound, and, as necessary, any of the additives listed in <Other Components> above (such as one or more types selected from the group that consists of solvents, adhesion-imparting agents, viscoelasticity-adjusting agents, wetting and dispersing agents, curing accelerators (curing catalysts), reactive diluents, conductive powders other than the tin powder, resins other than the epoxy resins, antioxidants, curing agents, pigments, fillers, anticorrosion agents, defoaming agents, coupling agents, anti-settling agents, leveling agents, heavy metal inactivators, surfactants, pH-adjusting agents, UV absorbents, flame retardants, adhesion agents), and the like.

To prepare a conductive resin composition satisfying requirement (B) above, of the conductive resin compositions conforming to the present invention, it can be manufactured by adding to a mixing container in a desired order, and mixing together, the essential components including (a) tin powder, (b) epoxy resin, (c) organic acid compound and (c) curing agent, and, as necessary, any of the additives listed in <Other Components> above (such as one or more types selected from the group that consists of solvents, adhesion-imparting agents, viscoelasticity-adjusting agents, wetting and dispersing agents, curing accelerators (curing catalysts), reactive diluents, conductive powders other than the tin powder, resins other than the epoxy resins, antioxidants, curing agents, pigments, fillers, anticorrosion agents, defoaming agents, coupling agents, anti-settling agents, leveling agents, heavy metal inactivators, surfactants, pH-adjusting agents, UV absorbents, flame retardants, adhesion agents), and the like.

For mixing, a method of mixing using a planetary centrifugal mixer, ball mill, roll mill, bead mill, planetary mixer, tumbler, stirrer, agitator, mechanical homogenizer, ultrasonic homogenizer, high-pressure homogenizer, paint shaker, V-type blender, Nauta mixer, Banbury mixer, knead roller, one-axis extruder, two-axis extruder, etc., for example, may be used as deemed appropriate.

The temperature for preparing the conductive resin composition (temperature for mixing the components) is not specifically limited. Heating, etc., may be conducted as necessary, and the conductive resin composition may be prepared at 10 to 100°C, for example.

The atmosphere for preparing the conductive resin composition is not specifically limited. It may be prepared in air, or in an inert atmosphere.

### <Applications of Conductive Resin Composition>

Applications of the conductive resin composition proposed by the present invention are applications relating to the manufacture of conductive bodies. The conductive bodies may include other members, etc., in addition to the conductive resin composition.

The conductive bodies include one or more types selected from the group that consists of, for example, conductive inks, circuit connection materials, conductive pastes, films having conductivity, conductive fibers, conducive paints, conductive materials for semiconductor packages, conductive materials for microelectronic devices, anti-static materials, electromagnetic shielding materials, conductive adhesives (die-attaching adhesives and other adhesives for attaching surface-mount components), die-attaching pastes, actuators, sensors, conductive molded resin products, materials for forming electrodes of electronic components (terminals of chip resistors, etc.), materials for internal electrodes of electronic components (internal electrodes of MLCCs, etc.), collector electrode materials, antenna-forming materials, and the like.

For example, conductive inks, conductive pastes, conductive paints, conductive adhesives, etc., can be constituted by adding solvents as components of the conductive resin composition. In this case, viscosity is not specifically limited and the conductive resin composition can be anything from a low-viscosity varnish to a high-viscosity paste, etc., according to the application, etc.

For example, the conductive resin composition containing solvents, etc., as necessary, can be coated on any of various types of base materials by the casting method, dipping method, bar coating method, dispenser method, roll coating method, gravure coating method, gravure printing, screen printing, flexographic printing, spray coating method, spin coating method, inkjet method, offset printing, gravure offset printing, slit coating method, knife coating method, pad printing, resin letterpress printing, applicator method, reverse printing, reverse offset printing, etc., and then heated and dried at a temperature of 300°C or lower, into a film having conductivity. The atmospheres for drying include one or more types selected from the group that consists of in air, in an inert gas, in a vacuum, under reduced pressure, and the like. In particular, an inert gas atmosphere of nitrogen, argon, etc., is preferred from the viewpoint of suppressing deterioration of film having conductivity (preventing the oxidation of the tin powder, etc.).

The conductive resin composition proposed by the present invention may be molded by extrusion molding, injection molding, compression molding, vacuum molding, pressure molding, vacuum pressure molding, blow molding, TOM molding, press molding, insert molding, in-mold molding, or other molding method, and used as molded products. The molded products include, for example, electronic device components, automotive components, mechanical/mechanism components, food containers, films, sheets, fibers, and the like.

### [Conductive Film]

The conductive film proposed by the present invention is formed by the aforementioned conductive resin composition and has a volume resistivity of under 1.0 × 10⁻² Ω·cm. The volume resistivity of the conductive film is preferably under 1.0 × 10⁻³ Ω·cm, or more preferably 8.0 × 10⁻⁴ Ω·cm or lower, or yet more preferably 3.0 × 10⁻⁴ Ω·cm or lower. The conductive film proposed by the present invention can also have a volume resistivity under 1.0 × 10⁻⁴ Ω·cm (10⁻⁵ Ω·cm order), matching the conductive films formed by silver pastes.

Here, volume resistivity is obtained by the method described in Examples A to D.

The method for forming a conductive film from a conductive resin composition is not specifically limited. For example, a conductive film can be formed by preparing a conductive resin composition that contains solvents and coating it on a desired base material, followed by drying, etc. Also, a conductive film can be obtained by casting or coating a conductive resin composition on a releasable base material, followed by drying, etc., and then releasing the base material.

The conditions for forming a conductive film are not specifically limited and can be determined as deemed appropriate according to the coating target, etc. The temperature for drying a conductive resin composition after coating, etc., is 50°C or higher, for example, or preferably 90°C or higher, and 250°C or lower, for example, or preferably 220°C or lower. The period of drying, etc., is 5 minutes or longer, for example, or preferably 7 minutes or longer, and 300 minutes or shorter, for example, or preferably 200 minutes or shorter.

The dry film thickness of the conductive film is not specially limited and can be adjusted as deemed appropriate according to the application, etc. It is 10 µm or more, for example, or preferably 30 µm or more, and 1,000 µm or less, for example, or preferably 500 µm or less.

### [Conductive Ink]

The conductive ink proposed by the present invention contains the aforementioned conductive resin composition. For example, it can be obtained by dissolving and/or dispersing the aforementioned conductive resin composition in the aforementioned solvents as necessary.

The conductive ink proposed by the present invention may further contain, as necessary, any of the additives listed in <Other Components> above (such as one or more types selected from the group that consists of solvents, adhesion-imparting agents, viscoelasticity-adjusting agents, wetting and dispersing agents, curing accelerators (curing catalysts), reactive diluents, conductive powders other than the tin powder, resins other than the epoxy resins, curing agents, antioxidants, curing agents, pigments, fillers, anticorrosion agents, defoaming agents, coupling agents, anti-settling agents, leveling agents, heavy metal inactivators, surfactants, pH-adjusting agents, UV absorbents, flame retardants, adhesion agents), and the like.

A conductive ink is obtained by introducing the aforementioned components into a mixing container and then mixing them using one or more types of mixing devices selected from the group that consists of planetary centrifugal mixer, ball mill, roll mill, bead mill, planetary mixer, tumbler, stirrer, agitator, mechanical homogenizer, ultrasonic homogenizer, high-pressure homogenizer, paint shaker, V-type blender, Nauta mixer, Banbury mixer, knead roller, one-axis extruder, two-axis extruder, and the like, into a varnish- or paste-like state.

The conductive ink may be utilized as a conductive ink for printing with which to form wirings, for example. The method for applying the conductive ink on various types of base materials is not specifically limited. For example, it may be a method whereby the conductive resin composition is coated on base materials. Under the present invention, preferably one or more types of printing methods selected from the group that consist of, for example, screen printing, inkjet printing, flexographic printing, gravure printing, and the like, are used, or more preferably one or more types of printing methods selected from the group that consists of screen printing, inkjet printing, and the like, are used for the benefit of excellent printability and shape retainability.

Here, the mesh for screen printing may be selected as deemed appropriate, where preferably a mesh that does not excessively remove the conductive powders, unleaded solder powders, etc., in the conductive ink is adopted.

The film thickness of the coating film formed by coating the conductive ink may be any appropriate film thickness according to the various applications. It is 1 µm or more, for example, or more preferably 2 µm or more, or more preferably 5 µm or more, and 500 µm or less.

Conductive ink excels in one or more types of properties selected from the group that consists of conductivity, adhesion with respect to various types of base materials, leveling (surface smoothness), printability, etc.

### [Conductive Adhesive]

The conductive adhesive proposed by the present invention contains the aforementioned conductive resin composition. For example, it can be obtained by dissolving and/or dispersing the conductive resin composition in the aforementioned solvents as necessary.

The conductive adhesive proposed by the present invention may further contain, as necessary, any of the additives listed in <Other Components> above (such as one or more types selected from the group that consists of solvents, adhesion-imparting agents, viscoelasticity-adjusting agents, wetting and dispersing agents, curing accelerators (curing catalysts), reactive diluents, conductive powders other than tin powder, resins other than epoxy resins, curing agents, antioxidants, curing agents, pigments, fillers, anticorrosion agents, defoaming agents, coupling agents, anti-settling agents, leveling agents, heavy metal inactivators, surfactants, pH-adjusting agents, UV absorbents, flame retardants, adhesion agents), and the like.

The conductive adhesive is obtained by introducing the aforementioned components into a mixing container and then mixing them using one or more types of mixing devices selected from the group that consists of planetary centrifugal mixer, ball mill, roll mill, bead mill, planetary mixer, tumbler, stirrer, agitator, mechanical homogenizer, ultrasonic homogenizer, high-pressure homogenizer, paint shaker, V-type blender, Nauta mixer, Banbury mixer, knead roller, one-axis extruder, two-axis extruder, and the like, into a varnish- or paste-like state.

The conductive adhesive proposed by the present invention is used so that target bonding areas will be bonded in a manner having conductivity. For example, it is used in the manufacture of batteries and electric/electronic devices where bonding that requires conductivity is implemented, etc.

The conductive adhesive proposed by the present invention may be used as an anisotropic conductive adhesive. When used as an anisotropic conductive adhesive, it can form highly reliable conductive connections in the electrode connections of miniaturized IC chips, light-emitting diodes, and other electronic components, circuit boards, etc. Also, once the conductive adhesive proposed by the present invention is cured, the surface of the cured film may exhibit insulating property, which is advantageous for high-density mounting of electronic components.

The bonded structures in which the bonding target members are bonded together via the conductive adhesive proposed by the present invention include, for example, IC cards, IC tags, and other RFID-related products comprising IC chips bonded on circuit boards having electrodes, light-emitting electronic components comprising light-emitting diodes bonded on circuit boards having electrodes, etc. For example, by forming multiple electrodes on at least one face of a circuit board and coating the conductive adhesive proposed by the present invention thereon in a manner at least covering each electrode and forming an adhesive film, and then by positioning the electrode parts of each electronic component to face the respective electrode parts and pressure-bonding them, followed by curing of the adhesive layer, a bonded structure using the conductive adhesive can be formed.

The means for coating the conductive adhesive proposed by the present invention on base materials is not specifically limited. For example, it may be a method whereby the conductive resin composition is coated on base materials. Under the present invention, this is achieved by printing, discharge, etc. For the printing methods, preferably one or more types of printing methods selected from the group that consist of, for example, screen printing, inkjet printing, flexographic printing, gravure printing, and the like, are used, or more preferably one or more types of printing methods selected from the group that consists of screen printing, inkjet printing, and the like, are used for the benefit of excellent printability and shape retainability.

Here, the mesh for screen printing may be selected as deemed appropriate, where preferably a mesh that does not excessively remove the conductive powders in the conductive adhesive is adopted.

The film thickness of the adhesive film formed by coating the conductive adhesive can be adjusted to appropriate film thicknesses according to the various applications. It is 1 µm or more, for example, or preferably 2 µm or more, or more preferably 5 µm or more, and 200 µm or less.

The conductive adhesive proposed by the present invention may be formed like a film. A film-like state of the conductive adhesive can be achieved by, for example, a method of coating on a releasable supporting body a conductive adhesive solution obtained by adding solvents, etc., to the conductive adhesive composition as necessary, and then removing the solvents, etc. In a film-like state, the conductive adhesive offers more convenience in terms of handling, etc. One or more layers, each comprising the conductive adhesive in a film-like state, and, if necessary, one or more insulating adhesive layers, one or more releasable material layers etc., can be used together as a multi-layer structure.

The conductive adhesive proposed by the present invention can bond the bonding targets together when, usually used with heating and pressurization. The heating temperature is not specifically limited so long as it is in a range where the bonding targets are not damaged, such as 70°C or higher, but no higher than 250°C, for example. The pressure is not specifically limited so long as the bonding targets are not damaged, such as 0.1 MPa or higher, but no higher than 10 MPa, for example. Preferably the heating and pressurization are performed for 0.5 seconds or more but no more than 120 seconds, for example.

The conductive adhesive proposed by the present invention is used to electrically join the bonding targets. For example, it can be used as an adhesive for heterogeneous bonding targets for bonding, while also electrically connecting together bonding targets that are made of different materials and have different thermal expansion coefficients. Additionally, the conductive adhesive proposed by the present invention can be used as anisotropic conductive adhesives, conductive pastes, conductive adhesive films, and other circuit connection materials, underfill materials, LOC tapes, and other semiconductor element bonding materials.

### [Circuit Connection Material]

The circuit connection material proposed by the present invention contains the aforementioned conductive resin composition and/or conductive adhesive.

The circuit connection material proposed by the present invention may further contain, as necessary, any of the additives listed in <Other Components> above (such as one or more types selected from the group that consists of solvents, adhesion-imparting agents, viscoelasticity-adjusting agents, wetting and dispersing agents, curing accelerators (curing catalysts), reactive diluents, conductive powders other than tin powder, resins other than epoxy resins, curing agents, antioxidants, curing agents, pigments, fillers, anticorrosion agents, defoaming agents, coupling agents, anti-settling agents, leveling agents, heavy metal inactivators, surfactants, pH-adjusting agents, UV absorbents, flame retardants, adhesion agents), and the like.

The circuit connection material proposed by the present invention is used for conductively connecting various electronic components and circuit boards, as well as electrically interconnecting (inter-bonding) electric/electronic circuit boards.

The shape or the like of the circuit connection material is not specifically limited, but preferably it is in a liquid or film-like state.

A liquid state of the circuit connection material can be achieved by, for example, mixing organic solvents and other solvents with the conductive resin composition proposed by the present invention to liquefy the composition.

A film-like state of the circuit connection material can be achieved by, for example, casting/coating on a releasable base material the conductive resin composition proposed by the present invention that has been liquefied as mentioned above, to form a film, after which the solvents are removed by drying, followed by releasing of the formed film from the releasable base material.

Also, a film-like state of the circuit connection material can be achieved by, for example, impregnating into a nonwoven fabric, etc., the conductive resin composition proposed by the present invention that has been liquefied as mentioned above, and then shaping the nonwoven fabric, etc., on a releasable base material, after which the solvents are removed by drying, followed by releasing of the nonwoven fabric, etc., from the releasable base material.

The electrical connection method, etc., using the circuit connection material is not specifically limited. For example, it may be a method whereby the circuit connection material is provided between an electrode of an electronic component, circuit, etc., and a facing electrode on a base material, and then heated to electrically connect the two electrodes and inter-bond the electrodes. The heating may be accompanied by pressurization, if necessary.

The method for providing the circuit connection material between the facing electrodes is not specifically limited. For example, it may be a method of coating the circuit connection material in a liquid state, a method of sandwiching the circuit connection material in a film-like state, and the like.

Also, when conductively connecting a pin of an electronic component, etc., and a circuit, there is a method whereby the circuit connection material is provided at the base of the pin and the pin is butt-joined to constitute a conductive connection, and the like.

The circuit connection material can be effectively used as an anisotropic conductive material, and it can also be used in an electrode connection method whereby a circuit connection material offering excellent adhesion is formed between facing electrodes on base materials, and then heated/pressurized so that the two electrodes will make contact and the base materials will be bonded together. For the base materials on which the electrodes are formed, various combinations of semiconductor, glass, ceramic, and other inorganic matters, polyimide, polycarbonate, and other organic matters, glass epoxy, and other composites thereof, and the like, can be applied.

### Examples

The present invention is explained in greater detail below by citing examples. It should be noted that the present invention is not limited by these examples. Unless otherwise specified, %" and "part(s)" represent "% by mass" and "part(s) by mass," respectively.

### [Example A]

Example A relates to conductive resin compositions satisfying requirement (A) above, of the conductive resin compositions conforming to the present invention.

The components and base materials used in Example A are each described below.
· Tin powder A1: Spherical tin powder (D50 = 5.5 µm, Sn ≥ 99.5% by mass)
· Tin powder A2: Amorphous tin powder (D50 = 7.5 µm, Sn ≥ 99.9% by mass)
· Copper powder A: Spherical copper powder (particle size 10 µm to 25 µm, Copper Powder (Spheroidal), 98%, manufactured by Sigma-Aldrich, Inc.)
· Nickel powder A: Amorphous nickel powder (D90: 10 µm or less)
· Epoxy resin A1: Bisphenol-type epoxy resin (jER 1001 manufactured by Mitsubishi Chemical Corporation)
· Epoxy resin A2: Bisphenol-type epoxy resin (jER 1004 manufactured by Mitsubishi Chemical Corporation)
· Epoxy resin A3: Toughened epoxy resin (LCE-2615 manufactured by Nippon Kayaku Co., Ltd.)
· Epoxy resin A4: Trisphenol methane-type epoxy resin (EPPN-501H manufactured by Nippon Kayaku Co., Ltd.)
· Epoxy resin A5: Bisphenol-type epoxy resin (jER 828 manufactured by Mitsubishi Chemical Corporation)
· Epoxy resin A6: Rubber-modified epoxy resin (EPR-1415-1 manufactured by ADEKA Corporation)
· Epoxy resin A7: Propylene oxide adduct bisphenol-type epoxy resin (EP-4000S manufactured by ADEKA Corporation)
· Organic acid compound A1: Glutaric acid
· Organic acid compound A2: Liquid polycarboxylic acid (MMA-10R manufactured by Okamura Oil Mill, Ltd.)
· Organic acid compound A3: Pimelic acid
· Solvent A1: Dipropylene glycol monomethyl ether
· Solvent A2: Ethyl carbitol
· Solvent A3: Ethyl diglycol acetate
· Solvent A4: 2-ethyl-1,3-hexanediol
· Solvent A5: Ethylene glycol
· Adhesion accelerator A1: BYK 4512 (manufactured by BYK Japan K.K.)
· Viscoelasticity-adjusting agent A1: RHEOBYK-405 (manufactured by BYK Japan K.K.)
· Viscoelasticity-adjusting agent A2: RHEOBYK-431 (manufactured by BYK Japan K.K.)
· Viscoelasticity-adjusting agent A3: RHEOBYK-430 (manufactured by BYK Japan K.K.)
· Wetting and dispersing agent A: DISPERBYK-2152 (manufactured by BYK Japan K.K.)
· PET film, PET base material: LUMIRROR S10 (manufactured by Toray Industries, Inc.)
· Glass base material: Glass square plate, blue plate (soda) glass (manufactured by AS ONE Corporation)

In Example A, curability of the conductive resin composition, and joining strength, volume resistivity, surface insulating property, and LED lighting test of the conductive film (dry coating film) formed by the conductive resin composition, were measured/evaluated according to the methods described below.

### <Curability>

Using as a mask a PET film in which a hole of 2 cm × 2 cm was opened, the conductive resin composition was hand-printed to produce a coating film of 2 cm × 2 cm on a glass base material, followed by heating and curing under the heat treatment conditions of 160°C for 60 minutes. The center of the obtained coating film was gently touched with a spatula and the degree to which the coating film deformed was evaluated according to the criteria below. Under the present invention, A means acceptable, while C means unacceptable.
A: The coating film has cured and does not deform.
C: The coating film is not cured and deforms easily.

### <Joining Strength>

A glass epoxy base material (manufactured by Youmei K.K.) with copper etched over an area of 2.0 mm² at intervals of 4 mm, and a 5025 chip resistor (MCR-50 manufactured by ROHM Co., Ltd.), were prepared. The conductive resin composition was coated over an area of 1.5 mm² to a thickness of 100 µm under each of the electrode terminals of the chip resistor, to which the copper pattern wiring on the glass epoxy base material was joined and the conductive resin composition was cured under heat treatment conditions of 160°C for 60 minutes, to produce a measurement sample.

Die shear testing (0.1 mm/sec) was performed on the obtained sample using bonding tester PTR 1102 (manufactured by Rhesca Co., Ltd.) to measure joining strength.

### <Volume Resistivity>

Using as a mask a PET film in which a hole of 2 cm × 2 cm was opened, the conductive resin composition was hand-printed to produce a coating film of 2 cm × 2 cm on a plastic film base material. This was followed by heating and curing under heat treatment conditions of 160°C for 60 minutes, to produce a conductive film (dry coating film) that, after the heat treatment (sintering), had each of the film thicknesses shown in <Table A1> and <Table A3>. Volume resistivity of the conductive film (dry coating film) was measured using resistivity meter LORESTA GP-MCP T610 (manufactured by Nittoseiko Analytech Co. Ltd.).

### <Surface Insulating Property>

Using as a mask a PET film in which a hole of 2 cm × 2 cm was opened, the conductive resin composition was hand-printed to produce a coating film of 2 cm × 2 cm on a plastic film base material. This was followed by heating and curing under heat treatment conditions of 160°C for 60 minutes, to produce a conductive film (dry coating film) that, after the heat treatment, had each of the film thicknesses shown in <Table A4>. Volume resistivity of the conductive film (dry coating film) was measured using resistivity meter LORESTA GP-MCP T610 (manufactured by Nittoseiko Analytech Co. Ltd.) and evaluated according to the criteria below:
A: The surface is insulating (volume resistivity is 1.0 × 10⁻¹ Ω·cm or higher).
C: The surface is conductive (volume resistivity is under 1.0 × 10⁻¹ Ω·cm).

### <LED Lighting Test>

A glass epoxy base material with copper etched over an area of 6.9 mm² at intervals of 3.8 mm, and a 5025 LED chip, were prepared. The conductive resin composition was coated over an area of 2.5 mm² to a thickness of 100 µm under each of the electrode terminals of the LED chip, to which copper pattern wiring on the glass epoxy base material was joined and the conductive resin composition was cured under heat treatment conditions of 160°C for 60 minutes, to produce a measurement sample.

Using an LED checker, a voltage of 3 V in electromotive force was applied across both ends of the wiring and the result was evaluated according to the criteria below. Under the present invention, A means acceptable, while C means unacceptable.
A: The LED turns on.
C: The LED does not turn on.

### [Example A1]

15.00 parts of tin powder A1, 0.84 parts of epoxy resin A1, 0.40 parts of organic acid compound A1, and 1.00 part of solvent A1 were added together and mixed under agitation using a planetary centrifugal mixer (Awatori Rentaro AR-100 manufactured by Thinky Corporation), to obtain a conductive resin composition.

Using as a mask a PET film in which a hole of 2 cm × 2 cm was opened, the obtained conductive resin composition was hand-printed to produce a coating film of 2 cm × 2 cm on a glass base material. This was followed by heating and curing under heat treatment conditions of 160°C for 60 minutes, to produce a conductive film (dry coating film) that, after the heat treatment, had the film thickness shown in <Table A1>.

The obtained conductive resin composition was evaluated for curability.

The obtained conductive film (dry coating film) was measured for volume resistivity.

The obtained conductive resin composition was used to perform the LED lighting test and measure joining strength.

These results are also shown in <Table A1>.

### [Examples A2 to A6, Comparative Examples A1 and A2]

Conductive resin compositions and conductive films (dry coating films) were produced in the same manner as in Example A1, except that the constitutional components of conductive resin composition, their contents (parts), and film thickness of conductive film (dry coating film), were changed as shown in <Table A1>, respectively.

Each obtained conductive resin composition was evaluated for curability.

Each obtained conductive resin composition was used to perform the LED lighting test and measure joining strength.

Each obtained conductive film (dry coating film) was measured for volume resistivity.

These results are also shown in <Table A1>.

In Comparative Examples A1 and A2, the curability evaluation was C and conductive films (dry coating film) could not be formed, and therefore film thickness, volume resistivity, LED lighting test, and joining strength could not be evaluated/measured.

**[Table 1]**

| <Table A1> | | | | | | | | |
|---|---|---|---|---|---|---|---|---|
| | Examples | | | | | | Comparative Examples | |
| | A1 | A2 | A3 | A4 | A5 | A6 | A1 | A2 |
| Tin powder A1 | 1500 | 1500 | 1500 | 1500 | 1500 | 1500 | 15.00 | 1500 |
| Epoxy resin A1 | 0.84 | | | | | | | |
| Epoxy resin A2 | | 0.84 | | | | | | |
| Epoxy resin A3 | | | 0.84 | | | | | |
| Epoxy resin A4 | | | | 0.84 | | | | |
| Epoxy resin A5 | | | | | 0.84 | 0.84 | 1.24 | 1.24 |
| Organic acid compound A1 | 0.40 | 0.40 | 0.40 | 0.40 | 0.4 | | | |
| Organic acid compound A3 | | | | | | 0.4 | | |
| Solvent A1 | 1.00 | | | | 0.5 | 0.7 | 0.5 | 1.0 |
| Solvent A2 | | 1.00 | 1.00 | 1.00 | | | | |
| Curability | A | A | A | A | A | A | C | C |
| Film thickness (µm) | 111 | 136 | 153 | 111 | 105 | 180 | Could not be measured | Could not be measured |
| Joining strength (gf) | 4870 | 4510 | 3343 | 3782 | 2047 | 6007 | Could not be measured | Could not be measured |
| Volume resistivity (Ω·cm) | 6.5 × 10⁻⁵ | 1.3 × 10⁻⁴ | 1.9 × 10⁻⁴ | 1.7 × 10⁻⁴ | 7.7 × 10⁻⁴ | 4.4 × 10⁻⁴ | Could not be measured | Could not be measured |
| LED lighting test | A | A | A | A | A | A | Could not be measured | Could not be measured |

### [Example A7]

1.12 parts of epoxy resin A1 and 0.38 parts of solvent A1 were mixed to obtain varnish V-A1.

1.50 parts of varnish V-A1, 15.00 parts of tin powder A1, 0.40 parts of organic acid compound A1, and 1.10 parts of solvent A1 were added together and mixed under agitation using a planetary centrifugal mixer (Awatori Rentaro AR-100 manufactured by Thinky Corporation), to obtain a conductive resin composition.

Using the obtained conductive resin composition, heat treatment was performed under the conditions shown in <Table A3> to produce on a glass base material a conductive film (dry coating film) that, after the heat treatment, had the film thickness shown in <Table A3>.

The obtained conductive film (dry coating film) was measured for volume resistivity.

The obtained conductive resin composition was used to perform the LED lighting test and measure joining strength.

These results are also shown in <Table A3>.

### [Examples A8 to A16]

Conductive resin compositions and conductive films (dry coating films) that, after the heat treatment, had the film thicknesses shown in <Table A3>, were produced in the same manner as in Example A7, except that the constitutional components of varnishes V-A4 to V-A9 and their contents (parts) were changed as shown in <Table A2> and that the constitutional components of conductive resin compositions, their contents (parts), base material, and conditions for forming coating films were changed as shown in <Table A3>, respectively.

Each obtained conductive film (dry coating film) was measured for volume resistivity.

These results are also shown in <Table A3>.

### [Examples A17 to A21, Comparative Examples A3 and A4]

Conductive resin compositions and conductive films (dry coating films) that, after the heat treatment, had the film thicknesses (film thicknesses of dry coating films) shown in <Table A4>, were produced in the same manner as in Example A7, except that the constitutional components of varnishes V-A2, V-A3, V-A6, V-A10, and V-A11 and their contents (parts) were changed as shown in <Table A2> and that the constitutional components of conductive resin compositions, their contents (parts), base material, and conditions for forming coating film were changed as shown in <Table A4>, respectively.

Each obtained conductive resin composition was evaluated for curability.

Each obtained conductive film (dry coating film) was measured for surface insulating property.

Each obtained conductive resin composition was used to perform the LED lighting test.

These results are also shown in <Table A4>.

In Comparative Example A4, the curability evaluation was C and a conductive film (dry coating film) could not be formed, and therefore the film thickness, volume resistivity, LED lighting test, and joining strength could not be evaluated/measured.

**[Table 2]**

| <Table A2> | | | | | | | | | | | |
|---|---|---|---|---|---|---|---|---|---|---|---|
| | V-A1 | V-A2 | V-A3 | V-A4 | V-A5 | V-A6 | V-A7 | V-A8 | V-A9 | V-A10 | V-A11 |
| Epoxy resin A1 | 1.12 | | | | | | | | 1.01 | | |
| Epoxy resin A5 | | 0.84 | | | | | | | | | 3.08 |
| Epoxy resin A6 | | | 0.84 | | | | | | | 0.84 | |
| Epoxy resin A7 | | | | 0.84 | 2.70 | 0.74 | 0.84 | 2.70 | | | |
| Organic acid compound A1 | | | | | | | | | | | 1.43 |
| Organic acid compound A2 | | | | | | | | | 0.10 | | |
| Solvent A1 | 0.38 | | | | | | | | 1.04 | 0.80 | 3.63 |
| Solvent A3 | | 1.70 | 1.00 | | | | | | | | |
| Solvent A4 | | | | 1.00 | 3.64 | 1.00 | | | | | |
| Solvent A5 | | | | | | | 1.30 | 3.64 | | | |

**[Table 3]**

| <Table A3> | | | | | | | | | | | |
|---|---|---|---|---|---|---|---|---|---|---|---|
| | | Examples | | | | | | | | | |
| | | A7 | A8 | A9 | A10 | A11 | A12 | A13 | A14 | A15 | A16 |
| Varnish | Type | V-A1 | V-A4 | V-A5 | V-A5 | V-A6 | V-A7 | V-A7 | V-A8 | V-A8 | V-A9 |
| | Amount | 1.50 | 1.84 | 1.74 | 1.74 | 1.74 | 2.14 | 2.14 | 1.72 | 1.72 | 2.15 |
| Tin powder A1 | | 1500 | | 5.00 | | | | | | | 1500 |
| Tin powder A2 | | | 1500 | 10.00 | 1500 | 1500 | 1500 | 1500 | 15.00 | 1500 | |
| Organic acid compound A1 | | 0.40 | 0.40 | 0.40 | 0.40 | 0.40 | 0.40 | 0.40 | 0.40 | 0.40 | 0.40 |
| Solvent A1 | | 1.10 | | | | | | | | | |
| Adhesion accelerator A1 | | | | 0.10 | | | | | | | |
| Viscoelasticity-adjusting agent A1 | | | | | 0.10 | | | | | | |
| Viscoelasticity-adjusting agent A2 | | | | | | 0.10 | | | | | |
| Wetting and dispersing agent A | | | | | | | | | 0.12 | 0.12 | |
| Heat treatment temperature for forming coating film (°C) | | 140 | 150 | 150 | 150 | 150 | 170 | 200 | 170 | 200 | 150 |
| Heat treatment time for forming coating film (min) | | 30 | 60 | 60 | 60 | 60 | 60 | 60 | 60 | 60 | 60 |
| Film thickness (µm) | | 100 | 200 | 90 | 110 | 90 | 90 | 70 | 80 | 90 | 90 |
| Base material | | Glass | Glass | Glass | Glass | Glass | Glass | PET | Glass | PET | Glass |
| Volume resistivity (Ω·cm) | | 1.7 × 10⁻⁴ | 4.0 × 10⁻⁴ | 3.4 × 10⁻⁴ | 2.3 × 10⁻⁴ | 6.0 × 10⁻⁴ | 4.0 × 10⁻⁴ | 1.8 × 10⁻⁴ | 5.9 × 10⁻⁴ | 2.7 × 10⁻⁴ | 1.4 × 10⁻⁴ |

**[Table 4]**

| <Table A4> | | | | | | | | |
|---|---|---|---|---|---|---|---|---|
| | | Examples | | | | | Comparative Examples | |
| | | A17 | A18 | A19 | A20 | A21 | A3 | A4 |
| Varnish | Type | V-A2 | V-A3 | V-A3 | V-A6 | V-A10 | V-A11 | V-A11 |
| | Amount | 2.54 | 1.84 | 1.84 | 1.74 | 1.64 | 2.22 | 2.22 |
| Tin powder A1 | | | | 15.00 | | 15.00 | | |
| Tin powder A2 | | 15.00 | 15.00 | | 15.00 | | | |
| Copper powder A | | | | | | | 15.00 | |
| Nickel powder A | | | | | | | | 15.00 |
| Organic acid compound A1 | | 0.40 | 0.40 | 0.40 | 0.40 | 0.40 | | |
| Solvent A1 | | | | | | | | 0.51 |
| Viscoelasticity-adjusting agent A3 | | | | | 0.10 | | | |
| Sintering temperature for forming coating film (°C) | | 160 | 160 | 160 | 150 | 150 | 160 | 160 |
| Sintering time for forming coating film (min) | | 60 | 60 | 60 | 60 | 30 | 60 | 60 |
| Curability | | A | A | A | A | A | A | C |
| Base material | | Glass | Glass | Glass | Glass | Glass | Glass | Glass |
| Film thickness (µm) | | 150 | 170 | 165 | 200 | 170 | 165 | Could not be measured. |
| Surface insulating property | | A | A | A | A | A | A | Could not be measured. |
| LED lighting test | | A | A | A | A | A | C | Could not be measured. |

The conductive films (dry coating films) formed by the conductive resin compositions pertaining to Examples A1 to A16 demonstrated excellent conductivity, all exhibiting conductivity equivalent to or better than silver pastes with their volume resistivity measuring 7.7 × 10⁻⁴ Ω·cm or lower, or even 6.5 × 10⁻⁵ Ω·cm in some cases. From this, it is understood that conductive resin compositions that are lower in cost compared to silver pastes, etc., and able to form conductive films demonstrating high conductivity equal to silver pastes, were obtained.

Also, the conductive films (dry coating films) formed with the conductive resin compositions pertaining to Examples A17 to A21 all had a volume resistivity of 1.0 × 10⁻¹ Ω·cm or higher, exhibiting a unique property that allows them to pass the LED lighting test despite their surface insulating property being evaluated as A. From this, it is understood that the conductive resin composition proposed by the present invention, when formed into a film, may exhibit a property where the surface is effectively an insulating body but the interior exhibits conductivity. Also, when a conductive connection is formed using the conductive resin composition proposed by the present invention, the film surface can be made effectively insulating while at the same time a conductive connection is formed between the connection members, which makes the present invention useful as a conductive material for conductive inks, conductive adhesives, circuit connection materials, etc.

Additionally, as shown in <Table A1>, the conductive films (dry coating films) formed by the conductive resin compositions conforming to the present invention demonstrated strong joining strength and high adhesion to the base materials.

On the other hand, the conductive resin compositions pertaining to Comparative Examples A1 and A2 not containing any organic acid compound could not form conductive films (dry coating film) with a curability evaluation of C, the conductive resin composition pertaining to Comparative Example A3 using a copper powder in place of tin powder failed to demonstrate sufficient conductivity with an LED lighting test evaluation of C, and the conductive resin composition pertaining to Comparative Example A4 using a nickel powder in place of tin powder could not form conductive film (dry coating film) with a curability evaluation of C.

### [Example B]

Example B relates to conductive resin compositions satisfying requirement (B) above or conductive resin compositions satisfying requirements (A) and (B) above, containing curing agents that include (d1) acid anhydride-based curing agents, of the conductive resin compositions conforming to the present invention.

The components and base materials used in Example B are each described below.
· Tin powder B: Spherical tin powder (D50 = 5.5 µm, Sn ≥ 99.5% by mass)
· Copper powder B: Spherical copper powder (particle size 10 µm to 25 µm, Copper Powder (Spheroidal), 98%, manufactured by Sigma-Aldrich, Inc.)
· Nickel powder B: Amorphous nickel powder (D90: 10 µm or less)
· Epoxy resin B1: Bisphenol-type epoxy resin (jER 1001 manufactured by Mitsubishi Chemical Corporation)
· Epoxy resin B2: Bisphenol-type epoxy resin (jER 1004 manufactured by Mitsubishi Chemical Corporation)
· Epoxy resin B3: Bisphenol-type epoxy resin (jER 828 manufactured by Mitsubishi Chemical Corporation)
· Epoxy resin B4: Rubber-modified epoxy resin (EPR-1415-1 manufactured by ADEKA Corporation)
· Epoxy resin B5: Polysulfide-modified epoxy resin (FLEP-50 manufactured by Toray Fine Chemicals Co., Ltd.)
· Epoxy resin B6: Urethane-modified epoxy resin (EPU-73B manufactured by ADEKA Corporation)
· Organic acid compound B1: Glutaric acid
· Organic acid compound B2: Liquid polycarboxylic acid (MMA-10R manufactured by Okamura Oil Mill, Ltd.)
· Acid anhydride-based curing agent B1: Polyacid polyanhydride (IPU-22AH manufactured by Okamura Oil Mill, Ltd.)
· Acid anhydride-based curing agent B2: Methyl-5-norbornene-2,3-dicarboxylic acid anhydride (KAYAHARD MCD manufactured by Nippon Kayaku Co., Ltd.)
· Acid anhydride-based curing agent B3: Succinic acid anhydride
· Acid anhydride-based curing agent B4: Phthalic acid anhydride
· Thiol-based curing agent B1: Polyfunctional thiol compound (TMMP-LV manufactured by SC Organic Chemical Co., Ltd.)
· Thiol-based curing agent B2: Polyfunctional thiol compound (PEMP-LV manufactured by SC Organic Chemical Co., Ltd.)
· Thiol-based curing agent B3: Polyfunctional thiol compound (DPMP manufactured by SC Organic Chemical Co., Ltd.)
· Thiol-based curing agent B4: Polyfunctional thiol compound (TEMPIC manufactured by SC Organic Chemical Co., Ltd.)
· Thiol-based curing agent B5: Polyfunctional thiol compound (QE-340M manufactured by Toray Fine Chemicals Co., Ltd.)
· Thiol-based curing agent B6: Polyfunctional thiol compound (TS-G manufactured by Shikoku Chemicals Corporation)
· Thiol-based curing agent B7: Polyfunctional thiol compound (C3TS-G manufactured by Shikoku Chemicals Corporation)
· Thiol-based curing agent B8: Polyfunctional thiol compound (Karenz MT NR-1 manufactured by Showa Denko K.K.)
· Thiol-based curing agent B9: Polyfunctional thiol compound (LP-3 manufactured by Toray Fine Chemicals Co., Ltd.)
· Phenol-based curing agent B: Liquid phenol resin (MEH-8005 manufactured by Meiwa Plastic Industries, Ltd.)
· Amine-based curing agent B1: (ST-11 manufactured by Mitsubishi Chemical Corporation)
· Amine-based curing agent B2: (ST-14 manufactured by Mitsubishi Chemical Corporation)
· Solvent B1: MFDG (dipropylene glycol monomethyl ether)
· Solvent B2: Ethyl carbitol
· Solvent B3: Butyl carbitol
· PET film, PET base material: LUMIRROR S10 (manufactured by Toray Industries, Inc.)
· Glass base material: Glass square plate, blue plate (soda) glass

### (manufactured by AS ONE Corporation)

The condition of paste and curability of the conductive resin compositions, and joining strength, volume resistivity, surface insulating property, and LED lighting test of the conductive films (dry coating films) formed by the conductive resin composition, were measured/evaluated according to the methods described below.

### <Condition of Paste>

The constitutional components of conductive resin compositions, of the corresponding contents (parts), as shown in <Table B1>, respectively, were taken and mixed under agitation using a planetary centrifugal mixer (Awatori Rentaro AR-100 manufactured by Thinky Corporation), to obtain conductive resin compositions. The appearance of each conductive resin composition was visually observed and evaluated according to the criteria below. Under the present invention, A means acceptable, while C means unacceptable.
A: The conductive resin composition is homogeneous.
C: Lumps, etc., have generated and the conductive resin composition is nonhomogeneous.

### <Curability>

Using as a mask a PET film in which a hole of 2 cm x 2 cm was opened, each conductive resin composition was hand-printed to produce a coating film of 2 cm x 2 cm on a glass base material, followed by heating and curing under heat treatment conditions of 160°C for 60 minutes. The center of the obtained coating film was gently touched with a spatula and the degree to which the coating film deformed was evaluated according to the criteria below. Under the present invention, A means acceptable, while C means unacceptable.
A: The coating film has cured and does not deform.
C: The coating film is not cured and deforms easily.

### <Volume Resistivity>

Using as a mask a PET film in which a hole of 2 cm x 2 cm was opened, each conductive resin composition was hand-printed to produce a coating film of 2 cm x 2 cm on a plastic film base material. This was followed by heating and curing under heat treatment conditions of 160°C for 60 minutes, to produce a conductive film (dry coating film) that, after the heat treatment (sintering), had each of the film thicknesses shown in <Table B1> and <Table B4>. Volume resistivity of the conductive film (dry coating film) was measured using resistivity meter LORESTA GP-MCP T610 (manufactured by Nittoseiko Analytech Co. Ltd.).

### <Surface Insulating Property>

Using as a mask a PET film in which a hole of 2 cm x 2 cm was opened, each conductive resin composition was hand-printed to produce a coating film of 2 cm x 2 cm on a plastic film base material. This was followed by heating and curing under heat treatment conditions of 160°C for 60 minutes, to produce a conductive film (dry coating film) that, after the heat treatment, had each of the film thicknesses shown in <Table B2>, <Table B5>, and <Table B6>. Volume resistivity of the conductive film (dry coating film) was measured using resistivity meter LORESTA GP-MCP T610 (manufactured by Nittoseiko Analytech Co. Ltd.) and evaluated according to the criteria below:
A: The surface is insulating (volume resistivity is 1.0 x 10⁻¹ Ω·cm or higher).
C: The surface is conductive (volume resistivity is under 1.0 x 10⁻¹ Ω·cm).

### <LED Lighting Test>

A glass epoxy base material with copper etched over an area of 6.9 mm² at intervals of 3.8 mm, and a 5025 LED chip, were prepared. Each conductive resin composition was coated over an area of 2.5 mm² to a thickness of 100 µm under each of the electrode terminals of the LED chip, to which the copper pattern wiring on the glass epoxy base material was joined and the conductive resin composition was cured under the heat treatment conditions of 160°C for 60 minutes, to produce a measurement sample.

Using an LED checker, a voltage of 3 V in electromotive force was applied across both ends of the wiring and the result was evaluated according to the criteria below. Under the present invention, A means acceptable, while C means unacceptable.
A: The LED turns on.
C: The LED does not turn on.

### <Joining Strength>

A glass epoxy base material (manufactured by Youmei K.K.) with copper etched over an area of 2.0 mm² at intervals of 4 mm, and a 5025 chip resistor (MCR-50 manufactured by ROHM Co., Ltd.), were prepared. Each conductive resin composition was coated over an area of 1.5 mm² to a thickness of 100 µm under each of the electrode terminals of the chip resistor, to which the copper pattern wiring on the glass epoxy base material was joined and the conductive resin composition was cured under heat treatment conditions of 160°C for 60 minutes, to produce a measurement sample.

Die shear testing (0.1 mm/sec) was performed on the obtained sample using bonding tester PTR 1102 (manufactured by Rhesca Co., Ltd.) to measure joining strength.

### [Example B1]

15.00 parts of tin powder B, 0.52 parts of epoxy resin B1, 0.40 parts of organic acid compound B1, 0.32 parts of acid anhydride-based curing agent B1, and 1.00 part of solvent B1 were added together and mixed under agitation using a planetary centrifugal mixer (Awatori Rentaro AR-100 manufactured by Thinky Corporation), to obtain a conductive resin composition.

Using as a mask a PET film in which a hole of 2 cm x 2 cm was opened, the obtained conductive resin composition was hand-printed to produce a coating film of 2 cm x 2 cm on a glass base material. This was followed by heating and curing under heat treatment conditions of 160°C for 60 minutes, to produce a conductive film (dry coating film) that, after the heat treatment, had the film thickness shown in <Table B1>.

The obtained conductive resin composition was evaluated for condition of paste and curability.

The obtained conductive film (dry coating film) was measured for volume resistivity.

The obtained conductive resin composition was used to perform the LED lighting test and measure joining strength.

These results are also shown in <Table B1>.

### [Examples B2 to B10, Comparative Examples B1 to B4]

Conductive resin compositions and conductive films (dry coating films) were produced in the same manner as in Example B1, except that the constitutional components of conductive resin compositions, their contents (parts), and film thickness of conductive films (dry coating film), were changed as shown in <Table B1>, respectively.

Each obtained conductive resin composition was evaluated for condition of paste and curability.

Each obtained conductive film (dry coating film) was measured for volume resistivity.

Each obtained conductive resin composition was used to perform the LED lighting test and measure joining strength.

These results are also shown in <Table B1>.

In Comparative Examples B1 and B2, the condition of the pastes was A, but the curability evaluation was C, and conductive films (dry coating film) could not be formed, and therefore joining strength, film thickness, and volume resistivity could not be evaluated/measured. In Comparative Examples B3 and B4, the condition of the pastes was C, and conductive resin compositions were nonhomogeneous, and therefore curability, joining strength, film thickness, and volume resistivity could not be evaluated/measured.

**[Table 5]**

| <Table B1> | | | | | | | | | | | | | | |
|---|---|---|---|---|---|---|---|---|---|---|---|---|---|---|
| | Examples | | | | | | | | | | Comparative Examples | | | |
| | B1 | B2 | B3 | B4 | B5 | B6 | B7 | B8 | B9 | B10 | B1 | B2 | B3 | B4 |
| Tin powder B | 15.00 | 15.00 | 15.00 | 15.00 | 15.00 | 15.00 | 15.00 | 15.00 | 15.00 | 15.00 | 15.00 | 15.00 | 15.00 | 15.00 |
| Epoxy resin B1 | 0.52 | 0.62 | 0.62 | | | | | | | | | | | |
| Epoxy resin B2 | | | | 0.64 | 0.79 | 0.87 | | | | | | | | |
| Epoxy resin B3 | | | | | | | 0.64 | 0.64 | 0.64 | 0.64 | 0.91 | 0.91 | 0.52 | 0.56 |
| Organic acid compound B1 | 0.40 | 0.40 | 0.40 | 0.40 | 0.20 | 0.10 | 0.40 | | 0.40 | 0.40 | | | 0.40 | 0.40 |
| Organic acid compound B2 | | | | | | | | 0.40 | | | | | | |
| Acid anhydride -based curing agent B 1 | 0.32 | | | 0.20 | 0.25 | 0.27 | 0.20 | 0.20 | | | | | | |
| Acid anhydride -based curing agent B2 | | 0.22 | 0.22 | | | | | | | | | | | |
| Acid anhydride -based curing agent B3 | | | | | | | | | 0.20 | | 0.32 | | | |
| Acid anhydride -based curing agent B4 | | | | | | | | | | 0.20 | | 0.32 | | |
| Amine-based curing agent B 1 | | | | | | | | | | | | | 0.31 | |
| Amine-based curing agent B2 | | | | | | | | | | | | | | 0.28 |
| Solvent B1 | 1.00 | 1.22 | 1.00 | | | | 0.50 | 0.50 | 0.50 | 0.50 | 1.00 | 1.00 | 0.50 | 0.50 |
| Solvent B2 | | | | 1.00 | 0.50 | 0.50 | | | | | | | | |
| Condition of paste | A | A | A | A | A | A | A | A | A | A | A | A | C | C |
| Curability | A | A | A | A | A | A | A | A | A | A | C | C | Could not be measured. | Could not be measured. |
| Joining strength (gf) | 2269 | 3039 | 3754 | 1339 | 3955 | 5990 | 3801 | 1685 | 2064 | 3885 | Could not be measured. | Could not be measured. | Could not be measured. | Could not be measured. |
| Film thickness (µm) | 120 | 115 | 125 | 145 | 180 | 225 | 90 | 105 | 145 | 140 | Could not be measured. | Could not be measured. | Could not be measured. | Could not be measured. |
| Volume resistivity (Ω·cm) | 5.6 × 10⁻⁵ | 4.5 × 10⁻⁵ | 4.2 × 10⁻⁵ | 5.5 × 10⁻⁵ | 1.5 × 10⁻⁴ | 8.9 × 10⁻⁵ | 5.2 × 10⁻⁴ | 5.7 × 10⁻⁴ | 2.7 × 10⁻⁴ | 1.3 × 10⁻⁴ | Could not be measured. | Could not be measured. | Could not be measured. | Could not be measured. |

### [Examples B11 to B21]

Conductive resin compositions and conductive films (dry coating films) were produced in the same manner as in Example B1, except that the constitutional components of conductive resin compositions, their contents (parts), and film thickness of conductive films (dry coating films), were changed as shown in <Table B2>, respectively.

Each obtained conductive resin composition was used to perform the LED lighting test and measure j oining strength.

Each obtained conductive film (dry coating film) was measured for surface insulating property.

These results are also shown in <Table B2>.

**[Table 6]**

| <Table B2> | | | | | | | | | | | |
|---|---|---|---|---|---|---|---|---|---|---|---|
| | Examples | | | | | | | | | | |
| | B11 | B12 | B13 | B14 | B15 | B16 | B17 | B18 | B19 | B20 | B21 |
| Tin powder B | 15.00 | 15.00 | 15.00 | 15.00 | 15.00 | 15.00 | 15.00 | 15.00 | 15.00 | 15.00 | 15.00 |
| Epoxy resin B3 | 0.50 | 0.51 | 0.50 | 0.44 | 0.47 | 0.56 | 0.54 | 0.42 | 0.35 | | |
| Epoxy resin B4 | | | | | | | | | 0.35 | 0.60 | |
| Epoxy resin B5 | | | | | | | | | | | 0.56 |
| Organic acid compound B1 | 0.20 | 0.20 | 0.20 | 0.20 | 0.20 | 0.20 | 0.20 | 0.20 | 0.20 | 0.20 | 0.20 |
| Acid anhydride-based curing agent B1 | 0.20 | 0.20 | 0.20 | 0.20 | 0.20 | 0.20 | 0.20 | 0.20 | 0.20 | 0.20 | 0.20 |
| Thiol-based curing agent B1 | 0.35 | | | | | | | | | | |
| Thiol-based curing agent B2 | | 0.33 | | | | | | | | | |
| Thiol-based curing agent B3 | | | 0.34 | | | | | | | | |
| Thiol-based curing agent B4 | | | | 0.41 | | | | | | | |
| Thiol-based curing agent B5 | | | | | 0.38 | | | | 0.14 | 0.22 | |
| Thiol-based curing agent B6 | | | | | | 0.28 | | | | | |
| Thiol-based curing agent B7 | | | | | | | 0.31 | | | | |
| Thiol-based curing agent B8 | | | | | | | | 0.42 | | | |
| Thiol-based curing agent B9 | | | | | | | | | | | 0.28 |
| Solvent B2 | 0.70 | 0.70 | 0.70 | 0.70 | 0.70 | 0.70 | 0.70 | 0.70 | 0.50 | 0.50 | 0.50 |
| Joining strength (gf) | 2064 | 3462 | 3418 | 2705 | 6677 | 3848 | 8466 | 3371 | 6554 | 4294 | 1590 |
| Surface insulating property | A | A | A | A | A | A | A | A | A | A | A |
| LED lighting test | A | A | A | A | A | A | A | A | A | A | A |

### [Example B22]

10.00 parts of epoxy resin B6 and 11.84 parts of acid anhydride-based curing agent B1 were mixed to obtain varnish V-B1.

0.84 parts of varnish V-B1, 15.00 parts of tin powder B, 0.40 parts of organic acid compound B1, and 1.50 parts of solvent B1 were added together and mixed under agitation using a planetary centrifugal mixer (Awatori Rentaro AR-100 manufactured by Thinky Corporation), to obtain a conductive resin composition.

Using the obtained conductive resin composition, heat treatment was performed under the conditions shown in <Table B4> to produce on a glass base material a conductive film (dry coating film) that, after the heat treatment, had the film thickness shown in <Table B4>.

The obtained conductive film (dry coating film) was measured for volume resistivity.

The obtained conductive resin composition was used to measure joining strength.

These results are also shown in <Table B4>.

### [Examples B23 to B25]

Conductive resin compositions and conductive films (dry coating films) that, after the heat treatment, had the film thicknesses (film thicknesses of dry coating films) shown in <Table B4>, were produced in the same manner as in Example B22, except that the constitutional components of varnishes V-B2 to V-B4 and their contents (parts) were changed as shown in <Table B3> and that the constitutional components of conductive resin compositions, their contents (parts) and conditions for forming coating films were changed as shown in <Table B4>, respectively.

Each obtained conductive film (dry coating film) was measured for volume resistivity.

Each obtained conductive resin composition was used to measure the joining strength.

These results are also shown in <Table B4>.

**[Table 7]**

| <Table B3> | | | | | | | | |
|---|---|---|---|---|---|---|---|---|
| | V-B1 | V-B2 | V-B3 | V-B4 | V-B5 | V-B6 | V-B7 | V-B8 |
| Epoxy resin B3 | | | 2.00 | 2.00 | 2.00 | 2.00 | 4.70 | 3.20 |
| Epoxy resin B4 | | 15.00 | | | | | | |
| Epoxy resin B6 | 10.00 | | | | | | | |
| Organic acid compound B1 | | | 1.82 | 1.82 | 1.82 | 1.82 | | 2.00 |
| Acid anhydride-based curing agent B1 | 11.84 | 10.88 | 0.91 | 1.21 | 0.61 | 0.45 | 1.47 | 1.00 |
| Thiol-based curing agent B1 | | | | 0.61 | 0.61 | 0.45 | | |
| Phenol-based curing agent B | | | 0.91 | | 0.61 | 0.91 | | |
| Solvent B1 | | | | | | | 2.50 | 2.50 |
| Solvent B2 | | | | 4.55 | | 4.55 | | |
| Solvent B3 | | | 4.55 | | 4.55 | | | |

**[Table 8]**

| <Table B4> | | | | | |
|---|---|---|---|---|---|
| | | Examples | | | |
| | | B22 | B23 | B24 | B25 |
| Varnish | Type | V-B1 | V-B2 | V-B3 | V-B4 |
| | Amount | 0.84 | 0.84 | 2.24 | 2.24 |
| Tin powder B | | 15.00 | 15.00 | 15.00 | 15.00 |
| Organic acid compound B1 | | 0.40 | 0.40 | | |
| Solvent B 1 | | 1.50 | 1.50 | | |
| Heat treatment temperature for forming coating film (°C) | | 160 | 160 | 160 | 160 |
| Heat treatment time for forming coating film (min) | | 60 | 60 | 60 | 60 |
| Film thickness (µm) | | 150 | 130 | 140 | 150 |
| Volume resistivity (Ω·cm) | | 1.4 x 10⁻⁴ | 5.8 x 10⁻⁵ | 3.5 x 10⁻⁴ | 3.5 x 10⁻⁴ |
| Joining strength (gf) | | 2001 | 1737 | 771 | 844 |

### [Examples B26 to B28]

Conductive resin compositions and conductive films (dry coating films) that, after the heat treatment, had the film thicknesses (film thicknesses of dry coating films) shown in <Table B5>, were produced in the same manner as in Example B22, except that the constitutional components of varnishes V-B2, V-B5, and V-B6 and their contents (parts) were changed as shown in <Table B3>, and that the constitutional components of conductive resin compositions, their contents (parts) and conditions for forming coating films were changed as shown in <Table B5>.

Each obtained conductive film (dry coating film) was measured for surface insulating property.

Each obtained conductive resin composition was used to perform the LED lighting test and measure the joining strength.

These results are also shown in <Table B5>.

**[Table 9]**

| <Table B5> | | | | |
|---|---|---|---|---|
| | | Examples | | |
| | | B26 | B27 | B28 |
| Varnish | Type | V-B2 | V-B5 | V-B6 |
| | Amount | 0.40 | 2.24 | 2.24 |
| Tin powder B | | 15.00 | 15.00 | 15.00 |
| Organic acid compound B1 | | 0.40 | | |
| Organic acid compound B2 | | 0.40 | | |
| Solvent B1 | | 1.60 | | |
| Heat treatment temperature for forming coating film (°C) | | 160 | 160 | 160 |
| Heat treatment time for forming coating film (min) | | 60 | 60 | 60 |
| Film thickness (µm) | | 100 | 130 | 160 |
| Surface insulating property | | A | A | A |
| LED lighting test | | A | A | A |
| Joining strength (gf) | | 1911 | 1926 | 2613 |

### [Comparative Examples B5 to B7]

Conductive resin compositions and conductive films (dry coating films) that, after the heat treatment, had the film thicknesses (film thicknesses of dry coating films) shown in <Table B6>, were produced in the same manner as in Example B22, except that the constitutional components of varnishes V-B7 and V-B8 and their contents (parts) were changed as shown in <Table B3> and that the constitutional components of conductive resin compositions, their contents (parts) and conditions for forming coating films were changed as shown in <Table B6>.

Each obtained conductive film (dry coating film) was measured for volume resistivity.

Each obtained conductive resin composition was used to perform the LED lighting test and measure joining strength.

These results are also shown in <Table B6>.

In Comparative Examples B5 and B7, the curability evaluation was C and conductive films (dry coating films) could not be formed, and therefore film thickness, joining strength, volume resistivity, and LED lighting test could not be evaluated/measured.

**[Table 10]**

| <Table B6> | | | |
|---|---|---|---|
| | Comparative Examples | | |
| | B5 | B6 | B7 |
| Type | V-B7 | V-B8 | V-B8 |
| Amount | 1.73 | 1.73 | 1.73 |
| Tin powder B | 15.00 | | |
| Copper powder B | | 15.00 | |
| Nickel powder B | | | 15.00 |
| Solvent B1 | | 0.51 | 1.02 |
| Curability | C | A | C |
| Joining strength (gf) | Could not be measured. | 1250 | Could not be measured. |
| Film thickness (µm) | Could not be measured. | 130 | Could not be measured. |
| Surface insulating property | Could not be measured. | A | Could not be measured. |
| LED lighting test | Could not be measured. | C | Could not be measured. |

The conductive films (dry coating films) formed by the conductive resin compositions pertaining to Examples B1 to B10 and B22 to B25 demonstrated excellent conductivity, all exhibiting conductivity equivalent to or better than silver pastes with their volume resistivity measuring under 1.0 x 10⁻³ Ω·cm, or even under 1.0 x 10⁻⁴ Ω·cm in some cases. From this, it is understood that conductive resin compositions that are lower in cost compared to silver pastes, etc., and able to form conductive films demonstrating high conductivity equal to silver pastes, were obtained.

Also, the conductive films (dry coating films) formed with the conductive resin compositions pertaining to Examples B11 to B21 and B26 to B28 all had a volume resistivity of 1.0 x 10⁻¹ Ω·cm or higher, exhibiting a unique property that allows them to pass the LED lighting test despite their surface insulating property being evaluated as A. From this, it is understood that the conductive resin composition proposed by the present invention, when formed into a film, may exhibit a property where the surface is effectively an insulating body but the interior exhibits conductivity. Also, when a conductive connection is formed using the conductive resin composition proposed by the present invention, the film surface can be made effectively insulating while at the same time a conductive connection is formed between the connection members, which makes the present invention useful as a conductive material for conductive inks, conductive adhesives, circuit connection materials, etc.

Additionally, as shown in <Table B1>, <Table B2>, <Table B4>, and <Table B5>, the conductive films (dry coating films) formed by the conductive resin compositions conforming to the present invention demonstrated strong joining strength and high adhesion to base materials.

On the other hand, the conductive resin compositions pertaining to Comparative Examples B1, B2, and B5 not containing any organic acid compound could not form conductive films (dry coating films) with a curability evaluation of C, the conductive resin compositions pertaining to Comparative Examples B3 and B4 using an amine-based curing agent in place of acid anhydride-based curing agent generated lumps and thus failed to produce a homogeneous conductive resin composition with a condition of paste of C, the conductive resin composition pertaining to Comparative Example B6 using a copper powder in place of tin powder failed to demonstrate sufficient conductivity with an LED lighting test evaluation of C, and the conductive resin composition pertaining to Comparative Example B7 using a nickel powder in place of tin powder could not form conductive film (dry coating film) with a curability evaluation of C.

### [Example C]

Example C relates to conductive resin compositions satisfying requirement (B) above or conductive resin compositions satisfying requirements (A) and (B) above, containing curing agents that include (d2) thiol-based curing agents, of the conductive resin compositions conforming to the present invention.

The components and base materials used in Example C are each described below.
· Tin powder C: Spherical tin powder (D50 = 5.5 µm, Sn ≥ 99.5% by mass)
· Copper powder C: Spherical copper powder (particle size 10 µm to 25 µm, Copper Powder (Spheroidal), 98%, manufactured by Sigma-Aldrich, Inc.)
· Epoxy resin C1: Bisphenol-type epoxy resin (jER 828 manufactured by Mitsubishi Chemical Corporation)
· Epoxy resin C2: Bisphenol-type epoxy resin (jER 1001 manufactured by Mitsubishi Chemical Corporation)
· Epoxy resin C3: Bisphenol-type epoxy resin (jER 1004 manufactured by Mitsubishi Chemical Corporation)
· Epoxy resin C4: Toughened epoxy resin (LCE-2615 manufactured by Nippon Kayaku Co., Ltd.)
· Epoxy resin C5: Urethane-modified epoxy resin (EPU-73B manufactured by ADEKA Corporation)
· Epoxy resin C6: Rubber-modified epoxy resin (EPR-1415-1 manufactured by ADEKA Corporation)
· Epoxy resin C7: Polysulfide-modified epoxy resin (FLEP-50 manufactured by Toray Fine Chemicals Co., Ltd.)
· Organic acid compound C1: Glutaric acid
· Organic acid compound C2: Liquid polycarboxylic acid (MMA-10R manufactured by Okamura Oil Mill, Ltd.)
· Thiol-based curing agent C1: Polyfunctional thiol compound (TMMP-LV manufactured by SC Organic Chemical Co., Ltd.)
· Thiol-based curing agent C2: Polyfunctional thiol compound (PEMP-LV manufactured by SC Organic Chemical Co., Ltd.)
· Thiol-based curing agent C3: Polyfunctional thiol compound (DPMP manufactured by SC Organic Chemical Co., Ltd.)
· Thiol-based curing agent C4: Polyfunctional thiol compound (TEMPIC manufactured by SC Organic Chemical Co., Ltd.)
· Thiol-based curing agent C5: Polyfunctional thiol compound (QE-340M manufactured by Toray Fine Chemicals Co., Ltd.)
· Thiol-based curing agent C6: Polyfunctional thiol compound (TS-G manufactured by Shikoku Chemicals Corporation)
· Thiol-based curing agent C7: Polyfunctional thiol compound (C3TS-G manufactured by Shikoku Chemicals Corporation)
· Thiol-based curing agent C8: Polyfunctional thiol compound (Karenz MT NR-1 manufactured by Showa Denko K.K.)
· Thiol-based curing agent C9: Polyfunctional thiol compound (LP-3 manufactured by Toray Fine Chemicals Co., Ltd.)
· Thiol-based curing agent C10: Polyfunctional thiol compound (LP-2 manufactured by Toray Fine Chemicals Co., Ltd.)
· Thiol-based curing agent C11: Polyfunctional thiol compound (LP-31 manufactured by Toray Fine Chemicals Co., Ltd.)
· Thiol-based curing agent C12: Polyfunctional thiol compound (LP-55 manufactured by Toray Fine Chemicals Co., Ltd.)
· Acid anhydride-based curing agent C: Polyacid polyanhydride (IPU-22AH manufactured by Okamura Oil Mill, Ltd.)
· Phenol-based curing agent C: Liquid phenol resin (MEH-8005 manufactured by Meiwa Plastic Industries, Ltd.)
· Amine-based curing agent C1: (ST-11 manufactured by Mitsubishi Chemical Corporation)
· Amine-based curing agent C2: (ST-14 manufactured by Mitsubishi Chemical Corporation)
· Solvent C1: MFDG (dipropylene glycol monomethyl ether)
· Solvent C2: Butyl carbitol
· Solvent C3: Ethyl carbitol
· Antioxidant C1: Hindered phenol-based compound (IRGANOX 1010 manufactured by BASF SE)
· Antioxidant C2: Hindered phenol-based compound (NONFLEX EBP manufactured by Seiko Chemical Co., Ltd.)
· Antioxidant C3: Hindered phenol-based compound (NONFLEX CBP manufactured by Seiko Chemical Co., Ltd.)
· Antioxidant C4: Hindered phenol-based compound (ADEKA STAB AO-50 manufactured by ADEKA Corporation)
· Antioxidant C5: Hindered phenol-based compound (ADEKA STAB AO-80 manufactured by ADEKA Corporation)
· Antioxidant C6: Hydroquinone
· Heavy metal inactivator C1: ADEKA STAB CDA-6S manufactured by ADEKA Corporation
· Heavy metal inactivator C2: ADEKA STAB ZS-90 manufactured by ADEKA Corporation
· Heavy metal inactivator C3: ADEKA STAB ZS-27 manufactured by ADEKA Corporation
· Curing accelerator C1: Guanidine-based compound (SANCELER D manufactured by Sanshin Chemical Industry Co., Ltd.)
· Curing accelerator C2: Guanidine-based compound (SANCELER DT manufactured by Sanshin Chemical Industry Co., Ltd.)
· PET film, PET base material: LUMIRROR S10 (manufactured by Toray Industries, Inc.)
· Glass base material: Glass square plate, blue plate (soda) glass

### (manufactured by AS ONE Corporation)

The condition of paste and curability of the conductive resin composition, and joining strength, surface insulating property, volume resistivity, and LED lighting test of the conductive film (dry coating film) formed by the conductive resin compositions, were measured/evaluated according to the methods described below.

### <Condition of Paste>

The constitutional components of conductive resin composition, of the corresponding contents (parts), as shown in <Table C1>, respectively, were taken and mixed under agitation using a planetary centrifugal mixer (Awatori Rentaro AR-100 manufactured by Thinky Corporation), to obtain a conductive resin composition. The appearance of this conductive resin composition was visually observed and evaluated according to the criteria below. Under the present invention, A means acceptable, while C means unacceptable.
A: The conductive resin composition is homogeneous.
C: Lumps, etc., have generated and the conductive resin composition is nonhomogeneous.

### <Curability>

Using as a mask a PET film in which a hole of 2 cm x 2 cm was opened, each conductive resin composition was hand-printed to produce a coating film of 2 cm x 2 cm on a glass base material, followed by heating and curing under the heat treatment conditions of 160°C for 60 minutes. The center of the obtained coating film was gently touched with a spatula and the degree to which the coating film deformed was evaluated according to the criteria below. Under the present invention, A means acceptable, while C means unacceptable.
A: The coating film has cured and does not deform.
C: The coating film is not cured and deforms easily.

### <Volume Resistivity>

Using as a mask a PET film in which a hole of 2 cm x 2 cm was opened, each conductive resin composition was hand-printed to produce a coating film of 2 cm x 2 cm on a plastic film base material. This was followed by heating and curing under heat treatment conditions of 160°C for 60 minutes, to produce a conductive film (dry coating film) that, after the heat treatment (sintering), had each of the film thicknesses (film thicknesses of dry coating films) shown in <Table C6>. The volume resistivity of the conductive film (dry coating film) was measured using resistivity meter LORESTA GP-MCP T610 (manufactured by Nittoseiko Analytech Co. Ltd.).

### <Surface Insulating Property>

Using as a mask a PET film in which a hole of 2 cm x 2 cm was opened, each conductive resin composition was hand-printed to produce a coating film of 2 cm x 2 cm on a plastic film base material. This was followed by heating and curing under heat treatment conditions of 160°C for 60 minutes, to produce a conductive film (dry coating film) that, after the heat treatment, had a film thickness of 100 µm or each of the film thicknesses shown in <Table C5>. The volume resistivity of the conductive film (dry coating film) was measured using resistivity meter LORESTA GP-MCP T610 (manufactured by Nittoseiko Analytech Co. Ltd.) and evaluated according to the criteria below:
A: The surface is insulating (volume resistivity is 1.0 x 10⁻¹ Ω·cm or higher).
C: The surface is conductive (volume resistivity is under 1.0 x 10⁻¹ Ω·cm).

### <LED Lighting Test>

A glass epoxy base material with copper etched over an area of 6.9 mm² at intervals of 3.8 mm, and a 5025 LED chip, were prepared. Each conductive resin composition was coated over an area of 2.5 mm² under each of the electrode terminals of the LED chip, to which the copper pattern wiring on the glass epoxy base material was joined and the conductive resin composition was cured under the heat treatment conditions of 160°C for 60 minutes, to produce a measurement sample.

Using an LED checker, a voltage of 3 V in electromotive force was applied across both ends of the wiring and the result was evaluated according to the criteria below. Under the present invention, A means acceptable, while C means unacceptable.
A: The LED turns on.
C: The LED does not turn on.

### <Joining Strength>

A glass epoxy base material (manufactured by Youmei K.K.) with copper etched over an area of 2. 0 mm² at intervals of 4 mm, and a 5025 chip resistor (MCR-50 manufactured by ROHM Co., Ltd.), were prepared. Each conductive resin composition was coated over an area of 1.5 mm² to a thickness of 100 µm under each of the electrode terminals of the chip resistor, to which the copper pattern wiring on the glass epoxy base material was joined and the conductive resin composition was cured under the heat treatment conditions of 160°C for 60 minutes, to produce a measurement sample.

Die shear testing (0.1 mm/sec) was performed on the obtained sample using bonding tester PTR 1102 (manufactured by Rhesca Co., Ltd.) to measure the joining strength.

### [Example C1]

15.00 parts of tin powder C, 0.48 parts of epoxy resin C1, 0.40 parts of organic acid compound C1, 0.36 parts of thiol-based curing agent C1 and 1.00 part of solvent C1 were added together and mixed under agitation using a planetary centrifugal mixer (Awatori Rentaro AR-100 manufactured by Thinky Corporation), to obtain a conductive resin composition.

Using as a mask a PET film in which a hole of 2 cm x 2 cm was opened, the obtained conductive resin composition was hand-printed to produce a coating film of 2 cm x 2 cm on a glass base material. This was followed by heating and curing under the heat treatment conditions of 160°C for 60 minutes, to produce a conductive film (dry coating film) that, after the heat treatment, had a film thickness of 100 µm.

The obtained conductive resin composition was evaluated for condition of paste and curability.

The obtained conductive resin composition was used to perform the LED lighting test and measure the joining strength.

The obtained conductive film (dry coating film) was measured for surface insulating property.

These results are also shown in <Table C1>.

### [Examples C2 to C22, Comparative Examples C1 to C4]

Conductive resin compositions and conductive films (dry coating films) were produced in the same manner as in Example C1, except that the constitutional components of conductive resin composition and their contents (parts) were changed as shown in <Table C1> to <Table C3>, respectively.

Each obtained conductive resin composition was evaluated for condition of paste and curability.

Each obtained conductive resin composition was used to perform the LED lighting test and measure joining strength.

Each obtained conductive film (dry coating film) was measured for surface insulating property.

These results are also shown in <Table C1> to <Table C3>.

In Comparative Example C1, the condition of paste was A, but the curability evaluation was C and a conductive film (dry coating film) could not be formed, and therefore joining strength, surface insulating property, and the LED lighting test could not be evaluated/measured. In Comparative Examples C2 and C3, the condition of paste was C and conductive resin composition was nonhomogeneous, and therefore curability, joining strength, surface insulating property, and the LED lighting test could not be evaluated/measured.

**[Table 11]**

| <Table C1> | | | | | | | | | |
|---|---|---|---|---|---|---|---|---|---|
| | Examples | | | | | | | | |
| | C1 | C2 | C3 | C4 | C5 | C6 | C7 | C8 | C9 |
| Tin powder C | 15.00 | 15.00 | 15.00 | 15.00 | 15.00 | 15.00 | 15.00 | 15.00 | 15.00 |
| Copper powder C | | | | | | | | | |
| Epoxy resin C1 | 0.48 | 0.50 | 0.51 | 0.50 | 0.44 | 0.47 | 0.56 | 0.54 | 0.42 |
| Epoxy resin C2 | | | | | | | | | |
| Epoxy resin C3 | | | | | | | | | |
| Epoxy resin C4 | | | | | | | | | |
| Epoxy resin C5 | | | | | | | | | |
| Epoxy resin C6 | | | | | | | | | |
| Epoxy resin C7 | | | | | | | | | |
| Organic acid compound C1 | 0.40 | 0.20 | 0.20 | 0.20 | 0.20 | 0.20 | 0.20 | 0.20 | 0.20 |
| Organic acid compound C2 | | | | | | | | | |
| Thiol-based curing agent C1 | 0.36 | 0.35 | | | | | | | |
| Thiol-based curing agent C2 | | | 0.33 | | | | | | |
| Thiol-based curing agent C3 | | | | 0.34 | | | | | |
| Thiol-based curing agent C4 | | | | | 0.41 | | | | |
| Thiol-based curing agent C5 | | | | | | 0.38 | | | |
| Thiol-based curing agent C6 | | | | | | | 0.28 | | |
| Thiol-based curing agent C7 | | | | | | | | 0.31 | |
| Thiol-based curing agent C8 | | | | | | | | | 0.42 |
| Thiol-based curing agent C9 | | | | | | | | | |
| Thiol-based curing agent C10 | | | | | | | | | |
| Thiol-based curing agent C11 | | | | | | | | | |
| Thiol-based curing agent C12 | | | | | | | | | |
| Acid anhydride-based curing agent C | | 0.20 | 0.20 | 0.20 | 0.20 | 0.20 | 0.20 | 0.20 | 0.20 |
| Amine-based curing agent C1 | | | | | | | | | |
| Amine-based curing agent C2 | | | | | | | | | |
| Solvent C1 | 1.00 | | | | | | | | |
| Solvent C2 | | | | | | | | | |
| Solvent C3 | | 0.70 | 0.70 | 0.70 | 0.70 | 0.70 | 0.70 | 0.70 | 0.70 |
| Condition of paste | A | A | A | A | A | A | A | A | A |
| Curability | A | A | A | A | A | A | A | A | A |
| Joining strength (gf) | 3459 | 2064 | 3462 | 3418 | 2705 | 6677 | 3848 | 8466 | 3371 |
| Surface insulating property | A | A | A | A | A | A | A | A | A |
| LED lighting test | A | A | A | A | A | A | A | A | A |

**[Table 12]**

| <Table C2> | | | | | | | | | |
|---|---|---|---|---|---|---|---|---|---|
| | Examples | | | | | | | | |
| | C10 | C11 | C12 | C13 | C14 | C15 | C16 | C17 | C18 |
| Tin powder C | 15.00 | 15.00 | 15.00 | 15.00 | 15.00 | 15.00 | 15.00 | 15.00 | 15.00 |
| Copper powder C | | | | | | | | | |
| Epoay resin C1 | | | 0.35 | | | | 0.64 | 0.44 | 0.38 |
| Epoxy resin C2 | 0.65 | | | | | | | | |
| Epoxy resin C3 | | 0.73 | | | | 0.72 | | | |
| Epoxy resin C4 | | | | | 0.64 | | | | |
| Epoxy resin C5 | | | | | | | | | |
| Epoxy resin C6 | | | 0.35 | 0.60 | | | | | |
| Epoxy resin C7 | | | | | | | | | |
| Organic acid compound C1 | 0.40 | 0.40 | 0.20 | 0.20 | 0.20 | 0.20 | 0.20 | 0.20 | 0.20 |
| Organic acid compound C2 | | | | | | | | | |
| Thiol-based curing agent C1 | 0.19 | 0.11 | | | | | | | |
| Thiol-based curing agent C2 | | | | | | | | | |
| Thiol-based curing agent C3 | | | | | | | | | |
| Thiol-based curing agent C4 | | | | | | | | | |
| Thiol-based curing agent C5 | | | 0.14 | 0.22 | 0.20 | 0.12 | | | |
| Thiol-based curing agent C6 | | | | | | | | | |
| Thiol-based curing agent C7 | | | | | | | | | |
| Thiol-based curing agent C8 | | | | | | | | | |
| Thiol-based curing agent C9 | | | | | | | 0.20 | | |
| Thiol-based curing agent C10 | | | | | | | | 0.40 | |
| Thiol-based curing agent C11 | | | | | | | | | 0.46 |
| Thiol-based curing agent C12 | | | | | | | | | |
| Acid anhydride-based curing agent C | | | 0.20 | 0.20 | | | | | |
| Amine-based curing agent C1 | | | | | | | | | |
| Amine-based curing agent C2 | | | | | | | | | |
| Solvent C1 | 1.00 | | | | | | | | |
| Solvent C2 | | | 0.50 | 0.50 | 0.50 | 0.50 | 0.50 | 0.50 | 0.50 |
| Solvent C3 | | 1.00 | | | | | | | |
| Condition of paste | A | A | A | A | A | A | A | A | A |
| Curability | A | A | A | A | A | A | A | A | A |
| Joining strength (gf) | 5256 | 6417 | 6554 | 4294 | 9762 | 8201 | 4017 | 2702 | 2403 |
| Surface insulating property | A | A | A | A | A | A | A | A | A |
| LED lighting test | A | A | A | A | A | A | A | A | A |

**[Table 13]**

| <Table C3> | | | | | | | | |
|---|---|---|---|---|---|---|---|---|
| | Examples | | | | Comparative Examples | | | |
| | C19 | C20 | C21 | C22 | C1 | C2 | C3 | C4 |
| Tin powder C | 15.00 | 15.00 | 15.00 | 15.00 | 15.00 | 15.00 | 15.00 | |
| Copper powder C | | | | | | | | 15.00 |
| Epoxy resin C1 | 0.40 | 0.64 | | 0.48 | 0.70 | 0.52 | 0.56 | 0.48 |
| Epoxy resin C2 | | | | | | | | |
| Epoxy resin C3 | | | | | | | | |
| Epoxy resin C4 | | | | | | | | |
| Epoxy resin C5 | | | | | | | | |
| Epoxy resin C6 | | | | | | | | |
| Epoxy resin C7 | | | 0.56 | | | | | |
| Organic acid compound C1 | 0.20 | 0.20 | 0.20 | | | 0.40 | 0.40 | 0.39 |
| Organic acid compound C2 | | | | 0.40 | | | | |
| Thiol-based curing agent C1 | | | | 0.36 | 0.53 | | | 0.36 |
| Thiol-based curing agent C2 | | | | | | | | |
| Thiol-based curing agent C3 | | | | | | | | |
| Thiol-based curing agent C4 | | | | | | | | |
| Thiol-based curing agent C5 | | | | | | | | |
| Thiol-based curing agent C6 | | | | | | | | |
| Thiol-based curing agent C7 | | | | | | | | |
| Thiol-based curing agent C8 | | | | | | | | |
| Thiol-based curing agent C9 | | 0.20 | 0.28 | | | | | |
| Thiol-based curing agent C10 | | | | | | | | |
| Thiol-based curing agent C11 | | | | | | | | |
| Thiol-based curing agent C12 | 0.44 | | | | | | | |
| Acid anhydride-based curing agent C | | 0.20 | 0.20 | | | | | |
| Amine-based curing agent C1 | | | | | | 0.31 | | |
| Amine-based curing agent C2 | | | | | | | 0.28 | |
| Solvent C1 | | | | 1.00 | 1.00 | 0.50 | 0.50 | 1.50 |
| Solvent C2 | 0.50 | 0.50 | 0.50 | | | | | |
| Solvent C3 | | | | | | | | |
| Condition of paste | A | A | A | A | A | C | C | A |
| Curability | A | A | A | A | C | Could not be measured. | Could not be measured. | A |
| Joining strength (gf) | 3376 | 2868 | 1590 | 3897 | Could not be measured. | Could not be measured. | Could not be measured. | 3025 |
| Surface insulating property | A | A | A | A | Could not be measured. | Could not be measured. | Could not be measured. | A |
| LED lighting test | A | A | A | A | Could not be measured. | Could not be measured. | Could not be measured. | C |

### [Example C23]

2.00 parts of epoxy resin C1, 1.82 parts of organic acid compound C1, 0.91 parts of thiol-based curing agent C1, 0.91 parts of phenol-based curing agent C, and 4.55 parts of solvent C3 were mixed to obtain varnish V-C1.

2.24 parts of varnish V-C1 and 15.00 parts of tin powder C were added together and mixed under agitation using a planetary centrifugal mixer (Awatori Rentaro AR-100 manufactured by Thinky Corporation), to obtain a conductive resin composition.

Using the obtained conductive resin composition, a conductive film (dry coating film) that, after the heat treatment, had the film thickness shown in <Table C5>, was produced in the same manner as in Example C1.

The obtained conductive resin composition was used to perform the LED lighting test and measure joining strength.

The obtained conductive film (dry coating film) was measured for surface insulating property.

These results are also shown in <Table C5>.

### [Examples C24 to C33]

Conductive resin compositions and conductive films (dry coating films) that, after the heat treatment, had the film thicknesses shown in <Table C5>, were produced in the same manner as in Example C23, except that the constitutional components of varnishes V-C1 to V-C10 and their contents (parts) were changed as shown in <Table C4> and that the constitutional components of conductive resin composition and their contents (parts) were changed as shown in <Table C5>.

Each obtained conductive resin composition was used to perform the LED lighting test and measure joining strength.

Each obtained conductive film (dry coating film) was measured for surface insulating property.

These results are also shown in <Table C5>.

### [Examples C34 to C37]

Conductive resin compositions and conductive films (dry coating films) that, after the heat treatment, had the film thicknesses shown in <Table C6>, were produced in the same manner as in Example C23, except that the constitutional components of varnishes V-C8, V-C10 and V-C12 and their contents (parts) were changed as shown in <Table C4> and that the constitutional components of conductive resin composition and their contents (parts) were changed as shown in <Table C6>.

Each obtained conductive resin composition was used to measure joining strength.

Each obtained conductive film (dry coating film) was measured for volume resistivity.

These results are also shown in <Table C6>.

**[Table 14]**

| <Table C4> | | | | | | | | | | | | |
|---|---|---|---|---|---|---|---|---|---|---|---|---|
| | V-C1 | V-C2 | V-C3 | V-C4 | V-C5 | V-C6 | V-C7 | V-C8 | V-C9 | V-C10 | V-C11 | V-C12 |
| Epoxy resin C1 | 2.00 | 2.00 | 2.00 | 2.00 | | | | | | | | 2.40 |
| Epoxy resin C2 | | | | | 3.75 | 3.75 | 3.75 | 3.75 | 3.75 | 3.75 | 8.25 | |
| Organic acid compound C1 | 1.82 | 1.82 | 1.82 | 1.82 | 2.29 | 1.14 | 1.08 | 1.02 | 1.91 | 0.96 | 2.24 | 2.00 |
| Organic acid compound C2 | | | | | | 1.14 | 1.08 | 1.02 | | 0.96 | 2.24 | |
| Thiol-based curing agent C1 | 0.91 | 0.61 | 0.61 | 0.45 | 1.05 | 1.05 | 0.79 | 0.53 | 0.26 | 0.26 | 1.16 | 1.80 |
| Acid anhydride-based curing agent C | | 0.61 | | 0.45 | | | | | | | | |
| Phenol-based curing agent C | 0.91 | 0.61 | 1.21 | 0.91 | | | | | | | | |
| Solvent C1 | | | | | | | | | | | | 2.50 |
| Solvent C2 | | | | | 5.70 | 2.85 | 2.73 | 2.55 | 4.75 | 2.37 | 5.61 | |
| Solvent C3 | 4.55 | 4.55 | 4.55 | 4.55 | | | | | | | | |

**[Table 15]**

| <Table C5> | | | | | | | | | | | | |
|---|---|---|---|---|---|---|---|---|---|---|---|---|
| | | Examples | | | | | | | | | | |
| | | C23 | C24 | C25 | C26 | C27 | C28 | C29 | C30 | C31 | C32 | C33 |
| Varnish | Type | V-C1 | V-C2 | V-C3 | V-C4 | V-C5 | V-C6 | V-C7 | V-C8 | V-C9 | V-C10 | V-C8 |
| | Amount | 2.24 | 2.24 | 2.24 | 2.24 | 2.24 | 1.74 | 2.24 | 2.24 | 2.24 | 1.74 | 1.74 |
| Tin powder C | | 15.00 | 15.00 | 15.00 | 15.00 | 15.00 | 15.00 | 15.00 | 15.00 | 15.00 | 15.00 | 13.00 |
| Film thickness (µm) | | 100 | 130 | 130 | 160 | 91 | 86 | 73 | 128 | 65 | 85 | 81 |
| Joining strength (gf) | | 2478 | 1926 | 1611 | 2613 | 3456 | 8089 | 9395 | 10112 | 3160 | 9297 | 8362 |
| Surface insulating property | | A | A | A | A | A | A | A | A | A | A | A |
| LED lighting test | | A | A | A | A | A | A | A | A | A | A | A |

**[Table 16]**

| <Table C6> | | | | | |
|---|---|---|---|---|---|
| | | Examples | | | |
| | | C34 | C35 | C36 | C37 |
| Varnish | Type | V-C8 | V-C10 | V-C10 | V-C12 |
| | Amount | 1.74 | 1.74 | 1.74 | 1.74 |
| Tin powder C | | 17.00 | 17.00 | 13.00 | 15.00 |
| Film thickness (µm) | | 82 | 74 | 76 | 65 |
| Joining strength (gf) | | 8362 | 8246 | 6341 | 4050 |
| Volume resistivity (Ω·cm) | | 9.8 x 10⁻⁵ | 5.4 x 10⁻⁵ | 5.6 × 10⁻⁵ | 1.2 x 10⁻⁴ |

### [Examples C38 to C49]

Conductive resin compositions and conductive films (dry coating films) that, after the heat treatment, had a film thicknesses of 100 µm, were produced in the same manner as in Example C23, except that the constitutional components of varnish V-C11 and their contents (parts) were changed as shown in <Table C4> and that the constitutional components of conductive resin composition and their contents (parts) were changed as shown in <Table C7>.

Each obtained conductive resin composition was used to perform the LED lighting test and measure joining strength.

Each obtained conductive film (dry coating film) was measured for surface insulating property.

These results are also shown in <Table C7>.

**[Table 17]**

| <Table C7> | | | | | | | | | | | | |
|---|---|---|---|---|---|---|---|---|---|---|---|---|
| | Examples | | | | | | | | | | | |
| | C38 | C39 | C40 | C41 | C42 | C43 | C44 | C45 | C46 | C47 | C48 | C49 |
| Varnish V-C11 | 1.03 | 1.03 | 1.03 | 1.03 | 1.03 | 1.03 | 1.03 | 1.03 | 1.03 | 1.03 | 1.03 | 1.03 |
| Tin powder C | 8.91 | 8.91 | 8.91 | 8.91 | 8.91 | 8.91 | 8.91 | 8.91 | 8.91 | 8.91 | 8.91 | 8.91 |
| Solvent C2 | 0.06 | 0.06 | 0.06 | 0.06 | 0.06 | 0.06 | 0.06 | 0.06 | 0.06 | 0.06 | 0.06 | 0.06 |
| Antioxidant C1 | | 0.01 | | | | | | | | | | |
| Antioxidant C2 | | | 0.01 | | | | | | | | | |
| Antioxidant C3 | | | | 0.01 | | | | | | | | |
| Antioxidant C4 | | | | | 0.01 | | | | | | | |
| Antioxidant C5 | | | | | | 0.01 | | | | | | |
| Antioxidant C6 | | | | | | | | | | | | 0.01 |
| Heavy metal inactivator C1 | | | | | | | 0.01 | | | | | |
| Heavy metal inactivator C2 | | | | | | | | 0.01 | | | | |
| Heavy metal inactivator C3 | | | | | | | | | 0.01 | | | |
| Curing accelerator C1 | | | | | | | | | | 0.01 | | |
| Curing accelerator C2 | | | | | | | | | | | 0.01 | |
| Joining strength (gf) | 8820 | 9190 | 9200 | 10335 | 9811 | 7142 | 7474 | 8668 | 10014 | 11273 | 10003 | 7209 |
| Surface insulating property | A | A | A | A | A | A | A | A | A | A | A | A |
| LED lighting test | A | A | A | A | A | A | A | A | A | A | A | A |

The conductive films (dry coating films) formed by the conductive resin compositions pertaining to Examples C1 to C33 and C38 to C49 all had a volume resistivity of 1.0 x 10⁻¹ Ω·cm or higher, exhibiting a unique property that allows them to pass the LED lighting test despite their surface insulating property being evaluated as A. From this, it is understood that the conductive resin composition proposed by the present invention, when formed into a film, may exhibit a property where the surface is effectively an insulating body but the interior exhibits conductivity. Also, when a conductive connection is formed using the conductive resin composition proposed by the present invention, the film surface can be made effectively insulating while at the same time a conductive connection is formed between the connection members, which makes the present invention useful as a conductive material for conductive inks, conductive adhesives, circuit connection materials, etc.

The conductive films (dry coating films) formed by the conductive resin compositions pertaining to Examples C34 to C37 demonstrated excellent conductivity, all exhibiting conductivity equivalent to or better than silver pastes with their volume resistivity measuring 1.2 x 10⁻⁴ Ω·cm or lower (10⁻⁵ Ω·cm order in Examples C34 to C36). From this, it is understood that conductive resin compositions that are lower in cost compared to silver pastes, etc., and demonstrate high conductivity equal to silver pastes, were obtained.

Additionally, as shown in <Table C1> to <Table C3> and <Table C5> to <Table C7>, the conductive films (dry coating films) formed by the conductive resin compositions conforming to the present invention demonstrated strong joining strength and high adhesion to the base materials. In particular, Examples C28 to C30, C32 to C36 and C38 to C49, in which two types of organic acid compounds were combined, exhibited greater joining strength.

On the other hand, the conductive resin composition pertaining to Comparative Example C1 not containing any organic acid compound could not form conductive film (dry coating film) with a curability evaluation of C, the conductive resin compositions pertaining to Comparative Examples C2 and C3 using an amine-based curing agent in place of a thiol-based curing agent generated lumps, and thus failed to produce a homogeneous conductive resin composition with a condition of paste of C, and the conductive resin composition pertaining to Comparative Example C4 using a copper powder in place of tin powder failed to demonstrate sufficient conductivity with an LED lighting test evaluation of C.

### [Example D]

Example D relates to conductive resin compositions satisfying requirement (B) above or conductive resin compositions satisfying requirements (A) and (B) above, containing curing agents that include (d3) phenol-based curing agents, of the conductive resin compositions conforming to the present invention.

The components and base materials used in Example D are each described below.
· Tin powder D1: Spherical tin powder (D50 = 5.5 µm, Sn ≥ 99.5% by mass)
· Tin powder D2: Amorphous tin powder (D50 = 7.5 µm, Sn ≥ 99.9% by mass)
· Copper powder D: Spherical copper powder (particle size 10 µm to 25 µm, Copper Powder (Spheroidal), 98%, manufactured by Sigma-Aldrich, Inc.)
· Nickel powder D: Amorphous nickel powder (D90: 10 µm or less)
· Epoxy resin D1: Bisphenol-type epoxy resin (jER 1001 manufactured by Mitsubishi Chemical Corporation)
· Epoxy resin D2: Urethane-modified epoxy resin (EPU-73B manufactured by ADEKA Corporation)
· Epoxy resin D3: Bisphenol-type epoxy resin (jER 828 manufactured by Mitsubishi Chemical Corporation)
· Epoxy resin D4: Rubber-modified epoxy resin (EPR-1415-1 manufactured by ADEKA Corporation)
· Organic acid compound D1: Glutaric acid
· Organic acid compound D2: Pimelic acid
· Organic acid compound D3: Azelaic acid
· Organic acid compound D4: Diglycolic acid
· Organic acid compound D5: Succinic acid
· Organic acid compound D6: Adipic acid
· Phenol-based curing agent D1: Liquid phenol resin (MEH-8005 manufactured by Meiwa Plastic Industries, Ltd.)
· Phenol-based curing agent D2: Biphenyl aralkyl-type phenol resin (KAYAHARD GPH-103 manufactured by Nippon Kayaku Co., Ltd.)
· Phenol-based curing agent D3: Biphenyl aralkyl-type phenol resin (KAYAHARD GPH-65 manufactured by Nippon Kayaku Co., Ltd.)
· Amine-based curing agent D1: (ST-11 manufactured by Mitsubishi Chemical Corporation)
· Amine-based curing agent D2: (ST-14 manufactured by Mitsubishi Chemical Corporation)
· Solvent D1: MFDG (dipropylene glycol monomethyl ether)
· Solvent D2: Butyl carbitol
· Solvent D3: Ethyl carbitol
· PET film, PET base material: LUMIRROR S10 (manufactured by Toray Industries, Inc.)
· Glass base material: Glass square plate, blue plate (soda) glass

### (manufactured by AS ONE Corporation)

The condition of paste and curability of each conductive resin composition, and volume resistivity, surface insulating property, joining strength, and LED lighting test of the conductive film (dry coating film) formed by the conductive resin composition, were measured/evaluated according to the methods described below.

### <Condition of Paste>

The constitutional components of each conductive resin composition, of the corresponding contents (parts), as shown in <Table D1>, respectively, were taken and mixed under agitation using a planetary centrifugal mixer (Awatori Rentaro AR-100 manufactured by Thinky Corporation), to obtain a conductive resin composition. The appearance of this conductive resin composition was visually observed and evaluated according to the criteria below. Under the present invention, A means acceptable, while C means unacceptable.
A: The conductive resin composition is homogeneous.
C: Lumps, etc., have generated and the conductive resin composition is nonhomogeneous.

### <Curability>

Using as a mask a PET film in which a hole of 2 cm x 2 cm was opened, each conductive resin composition was hand-printed to produce a coating film of 2 cm x 2 cm on a glass base material, followed by heating and curing under heat treatment conditions of 160°C for 60 minutes. The center of the obtained coating film was gently touched with a spatula and the degree to which the coating film deformed was evaluated according to the criteria below. Under the present invention, A means acceptable, while C means unacceptable.
A: The coating film has cured and does not deform.
C: The coating film is not cured and deforms easily.

### <Volume Resistivity>

Using as a mask a PET film in which a hole of 2 cm x 2 cm was opened, each conductive resin composition was hand-printed to produce a coating film of 2 cm x 2 cm on a plastic film base material. This was followed by heating and curing under heat treatment conditions of 160°C for 60 minutes, to produce a conductive film (dry coating film) that, after the heat treatment (sintering), had each of the film thicknesses shown in <Table D1> and <Table D3>. Volume resistivity of the conductive film (dry coating film) was measured using resistivity meter LORESTA GP-MCP T610 (manufactured by Nittoseiko Analytech Co. Ltd.).

### <Surface Insulating Property>

Using as a mask a PET film in which a hole of 2 cm x 2 cm was opened, each conductive resin composition was hand-printed to produce a coating film of 2 cm x 2 cm on a plastic film base material. This was followed by heating and curing under heat treatment conditions of 160°C for 60 minutes, to produce a conductive film (dry coating film) that, after the heat treatment, had each of the film thicknesses shown in <Table D4>. Volume resistivity of the conductive film (dry coating film) was measured using resistivity meter LORESTA GP-MCP T610 (manufactured by Nittoseiko Analytech Co. Ltd.) and evaluated according to the criteria below:
A: The surface is insulating (volume resistivity is 1.0 x 10⁻¹ Ω·cm or higher).
C: The surface is conductive (volume resistivity is under 1.0 x 10⁻¹ Ω·cm).

### <LED Lighting Test>

A glass epoxy base material with copper etched over an area of 6.9 mm² at intervals of 3.8 mm, and a 5025 LED chip, were prepared. Each conductive resin composition was coated over an area of 2.5 mm² to a thickness of 100 µm under each of the electrode terminals of the LED chip, to which the copper pattern wiring on the glass epoxy base material was joined and the conductive resin composition was cured under heat treatment conditions of 160°C for 60 minutes, to produce a measurement sample.

Using an LED checker, a voltage of 3 V in electromotive force was applied across both ends of the wiring and the result was evaluated according to the criteria below. Under the present invention, A means acceptable, while C means unacceptable.
A: The LED turns on.
C: The LED does not turn on.

### <Joining Strength>

A glass epoxy base material (manufactured by Youmei K.K.) with copper etched over an area of 2.0 mm² at intervals of 4 mm, and a 5025 chip resistor (MCR-50 manufactured by ROHM Co., Ltd.), were prepared. Each conductive resin composition was coated over an area of 1.5 mm² to a thickness of 100 µm under each of the electrode terminals of the chip resistor, to which the copper pattern wiring on the glass epoxy base material was joined and the conductive resin composition was cured under heat treatment conditions of 160°C for 60 minutes, to produce a measurement sample.

Die shear testing (0.1 mm/sec) was performed on the obtained sample using bonding tester PTR 1102 (manufactured by Rhesca Co., Ltd.) to measure the joining strength.

### [Example D1]

15.00 parts of tin powder D1, 0.65 parts of epoxy resin D1, 0.40 parts of organic acid compound D1, 0.19 parts of phenol-based curing agent D1 and 1.00 part of solvent D1 were added together and mixed under agitation using a planetary centrifugal mixer (Awatori Rentaro AR-100 manufactured by Thinky Corporation), to obtain a conductive resin composition.

Using as a mask a PET film in which a hole of 2 cm x 2 cm was opened, the obtained conductive resin composition was hand-printed to produce a coating film of 2 cm x 2 cm on a glass base material. This was followed by heating and curing under heat treatment conditions of 160°C for 60 minutes, to produce a conductive film (dry coating film) that, after the heat treatment, had the film thickness shown in <Table D1>.

The obtained conductive resin composition was evaluated for condition of paste and curability.

The obtained conductive film (dry coating film) was measured for volume resistivity.

The obtained conductive resin composition was used to perform the LED lighting test and measure joining strength.

These results are also shown in <Table D1>.

### [Examples D2 to D10, Comparative Examples D1 to D3]

Conductive resin compositions and conductive films (dry coating films) were produced in the same manner as in Example D1, except that the constitutional components of conductive resin compositions, their contents (parts), and film thickness of conductive films (dry coating films), were changed as shown in <Table D1>, respectively.

Each obtained conductive resin composition was evaluated for condition of paste and curability.

Each obtained conductive film (dry coating film) was measured for volume resistivity.

Each obtained conductive resin composition was used to perform the LED lighting test and measure joining strength.

These results are also shown in <Table D1>.

In Example D10, volume resistivity was 1.0 x 10⁻¹ Ω·cm or higher and the surface was judged insulating, but the LED lighting test evaluation was A (LED turns on).

In Comparative Example D1, the condition of paste was A, but the curability evaluation was C, and conductive film (dry coating film) could not be formed, and therefore the film thickness, volume resistivity, the LED lighting test, and joining strength could not be evaluated/measured. In Comparative Examples D2 and D3, the condition of paste was C and conductive resin composition was nonhomogeneous, and therefore curability, film thickness, volume resistivity, the LED lighting test, and joining strength could not be evaluated/measured.

**[Table 18]**

| <Table D1> | | | | | | | | | | | | | |
|---|---|---|---|---|---|---|---|---|---|---|---|---|---|
| | Examples | | | | | | | | | | Com parative Examples | | |
| | D1 | D2 | D3 | D4 | D5 | D6 | D7 | D8 | D9 | D10 | D1 | D2 | D3 |
| Tin powder D1 | 15.00 | 15.00 | 15.00 | 15.00 | 15.00 | 15.00 | 15.00 | 15.00 | 15.00 | 15.00 | 15.00 | 15.00 | 15.00 |
| Epoxy resin D1 | 0.65 | 0.77 | 0.77 | 0.59 | 0.57 | 0.70 | 0.76 | 0.68 | 0.75 | | | | |
| Epoxy resin D3 | | | | | | | | | | 0.73 | 0.73 | 0.52 | 0.56 |
| Organic acid compound D1 | 0.40 | 0.40 | 0.40 | 0.40 | 0.40 | 0.40 | 0.40 | 0.40 | 0.40 | 0.40 | | 0.40 | 0.40 |
| Phenol-based curing agent D1 | 0.19 | | | | | | | | | 0.19 | 0.52 | | |
| Phenol-based curing agent D2 | | 0.36 | | | 0.27 | | | 0.16 | 0.09 | | | | |
| Phenol-based curing agent D3 | | | 0.32 | 0.25 | | 0.15 | 0.08 | | | | | | |
| Amine-based curing agent D1 | | | | | | | | | | | | 0.31 | |
| Amine-based curing agent D2 | | | | | | | | | | | | | 0.28 |
| Solvent D1 | 1.00 | 0.75 | 0.76 | 1.00 | 1.00 | | | | | 1.00 | 1.00 | 0.50 | 0.50 |
| Solvent D2 | | | | | | 1.00 | 1.00 | 1.00 | 1.00 | | | | |
| Condition of paste | A | A | A | A | A | A | A | A | A | A | A | C | C |
| Curability | A | A | A | A | A | A | A | A | A | A | C | Could not be measured. | Could not be measured. |
| Film thickness (µm) | 155 | 155 | 155 | 145 | 163 | 79 | 73 | 52 | 62 | 70 | Could not be measured. | Could not be measured. | Could not be measured. |
| Volume resistivity (Ω·cm) | 1.0 x 10⁻⁴ | 8.9 x 10⁻⁵ | 6.7 x 10⁻⁵ | 5.2 x 10⁻⁵ | 5.0 x 10⁻⁵ | 3.1 x 10⁻⁴ | 1.0 x 10⁻⁴ | 1.8 x 10⁻⁴ | 2.1 x 10⁻⁴ | Surface is insulating . | Could not be measured. | Could not be measured. | Could not be measured. |
| LED lighting test | A | A | A | A | A | A | A | A | A | A | Could not be measured. | Could not be measured. | Could not be measured. |
| Joining strength (gf) | 2408 | 3491 | 2348 | 3890 | 5388 | 1840 | 2204 | 1351 | 1906 | 2780 | Could not be measured. | Could not be measured. | Could not be measured. |

### [Example D11]

10.00 parts of epoxy resin D2 and 5.50 parts of phenol-based curing agent D1 were mixed to obtain varnish V-D1.

0.84 parts of varnish V-D1, 15.00 parts of tin powder D1, 0.40 parts of organic acid compound D1 and 1.50 parts of solvent D1 were added together and mixed under agitation using a planetary centrifugal mixer (Awatori Rentaro AR-100 manufactured by Thinky Corporation), to obtain a conductive resin composition.

Using the obtained conductive resin composition, a conductive film (dry coating film) that, after the heat treatment, had the film thickness shown in <Table D3>, was produced in the same manner as in Example D1.

The obtained conductive film (dry coating film) was measured for volume resistivity.

The obtained conductive resin composition was used to perform the LED lighting test and measure joining strength.

These results are also shown in <Table D3>.

### [Examples D12 to D20, Comparative Examples D4 and D5]

Conductive resin compositions and conductive films (dry coating films) that, after the heat treatment, had the film thicknesses shown in <Table D3>, were produced in the same manner as in Example D11, except that the constitutional components of varnishes V-D1 to V-D11 and their contents (parts) were changed as shown in <Table D2> and that the constitutional components of conductive resin composition and their contents (parts) were changed as shown in <Table D3>.

Each obtained conductive film (dry coating film) was measured for volume resistivity.

Each obtained conductive resin composition was used to perform the LED lighting test and measure joining strength.

These results are also shown in <Table D3>.

**[Table 19]**

| <Table D2> | | | | | | | | | | | |
|---|---|---|---|---|---|---|---|---|---|---|---|
| | V-D1 | V-D2 | V-D3 | V-D4 | V-D5 | V-D6 | V-D7 | V-D8 | V-D9 | V-D10 | V-D11 |
| Epoxy resin D2 | 10.00 | | | | | | | | | | |
| Epoxy resin D3 | | 3.00 | 3.00 | 3.00 | 3.00 | | 3.00 | 3.00 | 2.45 | 2.45 | 1.94 |
| Epoxy resin D4 | | | | | | 8.20 | | | | | |
| Phenol-based curing agent D 1 | 5.50 | 2.13 | 2.13 | 2.13 | 2.13 | 3.37 | 2.13 | 2.13 | 1.75 | 1.75 | 1.45 |
| Organic acid compound D1 | | 2.44 | | | | | | | 2.00 | | 1.58 |
| Organic acid compound D2 | | | 2.44 | | | | | | | 2.00 | |
| Organic acid compound D3 | | | | 2.44 | | | | | | | |
| Organic acid compound D4 | | | | | 2.44 | | | | | | |
| Organic acid compound D5 | | | | | | | 2.44 | | | | |
| Organic acid compound D6 | | | | | | | | 2.44 | | | |
| Solvent D1 | | | | | | | | | 2.50 | | |
| Solvent D3 | | 6.11 | 6.11 | 6.11 | 6.11 | | 6.11 | 6.11 | | 2.50 | 4.00 |

**[Table 20]**

| <Table D3> | | | | | | | | | | | | | |
|---|---|---|---|---|---|---|---|---|---|---|---|---|---|
| | | Examples | | | | | | | | | | Comparative Examples | |
| | | D11 | D12 | D13 | D14 | D15 | D16 | D17 | D18 | D19 | D20 | D4 | D5 |
| Varnish | Type | V-D1 | V-D2 | V-D2 | V-D3 | V-D3 | V-D4 | V-D5 | V-D5 | V-D9 | V-D10 | V-D11 | V-D11 |
| | Amount | 0.84 | 2.24 | 2.24 | 2.24 | 2.24 | 2.24 | 2.24 | 2.24 | 1.74 | 1.74 | 2.22 | 2.22 |
| Tin powder D1 | | 15.00 | 15.00 | | 15.00 | | | 15.00 | | 15.00 | 15.00 | | |
| Tin powder D2 | | | | 15.00 | | 15.00 | 15.00 | | 15.00 | | | | |
| Copper powder D | | | | | | | | | | | | 15.00 | |
| Nickel powder D | | | | | | | | | | | | | 15.00 |
| Organic acid compound D1 | | 0.40 | | | | | | | | | | | |
| Solvent D1 | | 1.50 | | | | | | | | | | | 0.51 |
| Film thickness (µm) | | 140 | 90 | 70 | 140 | 140 | 150 | 120 | 90 | 175 | 175 | 130 | 90 |
| Volume resistivity (Ω·cm) | | 1.1 x 10⁻⁴ | 4.1 x 10⁻⁵ | 5.6 x 10⁻⁴ | 3.2 x 10⁻⁴ | 1.2 x 10⁻³ | 3.7 x 10⁻³ | 9.0 x 10⁻⁵ | 3.0 x 10⁻⁴ | 1.6 x 10⁻⁴ | 2.0 x 10⁻⁴ | Surface is insulating. | Surface is insulating. |
| LED lighting test | | A | A | A | A | A | A | A | A | A | A | C | C |
| Joining strength (gf) | | 1345 | 1316 | 862 | 1558 | 1795 | 2868 | 3390 | 2231 | 2723 | 2410 | Not measured. | Not measured. |

### [Examples D21 to D25]

Conductive resin compositions and conductive films (dry coating films) that, after the heat treatment, had the film thicknesses (film thicknesses of dry coating films) shown in <Table D4>, were produced in the same manner as in Example D11, except that the constitutional components of varnish and their contents (parts) were changed as shown in <Table D2> and that the constitutional components of conductive resin composition and their contents (parts) were changed as shown in <Table D4>.

Each obtained conductive film (dry coating film) was measured for surface insulating property.

Each obtained conductive resin composition was used to perform the LED lighting test and measure joining strength.

These results are also shown in <Table D4>.

**[Table 21]**

| <Table D4> | | | | | | |
|---|---|---|---|---|---|---|
| | | Examples | | | | |
| | | D21 | D22 | D23 | D24 | D25 |
| Varnish | Type | V-D6 | V-D7 | V-D7 | V-D8 | V-D4 |
| | Amount | 0.84 | 2.24 | 2.24 | 2.24 | 2.24 |
| Tin powder D1 | | 15.00 | 15.00 | | 15.00 | 15.00 |
| Tin powder D2 | | | | 15.00 | | |
| Organic acid compound D1 | | 0.40 | | | | |
| Solvent D1 | | 1.50 | | | | |
| Film thickness (µm) | | 130 | 90 | 150 | 90 | 120 |
| Surface insulating property | | A | A | A | A | A |
| LED lighting test | | A | A | A | A | A |
| Joining strength (gf) | | 1664 | 2115 | 2215 | 1982 | 1562 |

The conductive films (dry coating films) formed by the conductive resin compositions pertaining to Examples D1 to D9 and D11 to D20 demonstrated excellent conductivity, all exhibiting conductivity equivalent to or better than silver pastes with their volume resistivity measuring under 1.0 x 10⁻³ Ω·cm, or even under 1.0 x 10⁻⁴ Ω·cm in some cases. From this, it is understood that conductive resin compositions that are lower in cost compared to silver pastes, etc., and able to form conductive films demonstrating high conductivity equal to silver pastes, were obtained.

The conductive films (dry coating films) formed with the conductive resin compositions pertaining to Examples D10 and D21 to D25 all had a volume resistivity of 1.0 x 10⁻¹ Ω·cm or higher, exhibiting a unique property that allows them to pass the LED lighting test despite their surface insulating property being evaluated as A. From this, it is understood that the conductive resin composition proposed by the present invention, when formed into a film, may exhibit a property where the surface is effectively an insulating body but the interior exhibits conductivity. Also, when a conductive connection is formed using the conductive resin composition proposed by the present invention, the film surface can be made effectively insulating while at the same time a conductive connection is formed between the connection members, which makes the present invention useful as a conductive material for conductive inks, conductive adhesives, circuit connection materials, etc.

Additionally, as shown in <Table D1>, <Table D3> and <Table D4>, the conductive films (dry coating films) formed by the conductive resin compositions conforming to the present invention demonstrated strong joining strength and high adhesion to the base materials.

On the other hand, the conductive resin composition pertaining to Comparative Example D1 not containing any organic acid compound could not form conductive film (dry coating film) with a curability evaluation of C, the conductive resin compositions pertaining to Comparative Examples D2 and D3 using an amine-based curing agent in place of phenol-based curing agent generated lumps and thus failed to produce a homogeneous conductive resin composition with a condition of paste of C, and the conductive resin composition pertaining to Comparative Example D4 using a copper powder in place of tin powder, as well as conductive resin composition pertaining to Comparative Example D5 using a nickel powder in place of tin powder, failed to demonstrate sufficient conductivity with an LED lighting test evaluation of C.

## Claims

1. A conductive resin composition comprising (a) tin powder, (b) epoxy resin and (c) organic acid compound, and satisfying requirement (A) and/or requirement (B) below;
(A): a content of the (a) tin powder, relative to a total amount, 100% by mass, of (a) tin powder, (b) epoxy resin, and (c) organic acid compound, is 90.1% by mass or higher; and/or
(B): (d) curing agent is contained, and (d) curing agent includes one or more types selected from (d1) acid anhydride-based curing agents, (d2) thiol-based curing agents, and (d3) phenol-based curing agents.

2. The conductive resin composition according to claim 1, wherein (b) epoxy resin meets requirement (i) and/or requirement (ii) below;
(i): liquid at 25°C; and/or
(ii): one or more types selected from the group consisting of bisphenol-type epoxy resins, rubber-modified epoxy resins, alicyclic epoxy resins, glycidyl amine-type epoxy resins, urethane-modified epoxy resins, polysulfide-modified epoxy resins, chelate-modified epoxy resins, trisphenol methane-type epoxy resins, naphthalene-type epoxy resins, dicyclopentadiene-modified epoxy resins, aliphatic epoxy resins, polyether-modified epoxy resins, polyfunctional aromatic epoxy resins, and hydrogenated bisphenol-type epoxy resins.

3. The conductive resin composition according to claim 1 or 2, wherein (d1) acid anhydride-based curing agents are polyacid polyanhydrides expressed by structural formula (1) below; 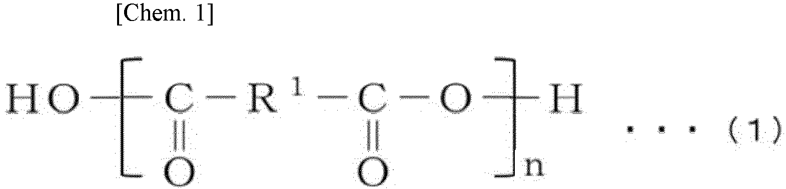 (in structural formula (1), R¹ is a straight-chain or branched hydrocarbon group with 10 or more but no more than 40 carbon atoms).

4. The conductive resin composition according to claim 1 or 2, wherein (d1) acid anhydride-based curing agents, (d2) thiol-based curing agents, or (d3) phenol-based curing agents are liquid at 25°C.

5. A conductive film formed by the conductive resin composition according to claim 1 or 2, whose volume resistivity is under 1.0 × 10⁻² Ω·cm.

6. A conductive ink containing the conductive resin composition according to claim 1 or 2.

7. A conductive adhesive containing the conductive resin composition according to claim 1 or 2.

8. A circuit connection material containing the conductive resin composition according to claim 1 or 2.
